# EUROPEAN PATENT APPLICATION

(11) **EP 2 262 095 A1**
(43) Date of publication of application: **15.12.2010**
(21) Application number: 09729614.9
(22) Date of filing: 03.04.2009
(51) Int. Cl.: H02N 2/00, B81B 3/00, G02B 7/02, G02B 7/04

(54) **ACTUATOR ARRAY SHEET**

(30) Priority: 08.04.2008 JP 2008100329
(71) Applicant: Konica Minolta Holdings, Inc., Tokyo 100-0005 (JP)
(72) Inventor: TANIMURA, Yasutaka, Tokyo 191-8511 (JP); KOSAKA, Akira, Tokyo 191-8511 (JP); MATSUO, Takashi, Tokyo 191-8511 (JP); YAMAMOTO, Natsuki, Tokyo 191-8511 (JP)
(74) Representative: HOFFMANN EITLE
(86) International application number: PCT/JP2009/056968
(87) International publication number: WO 2009/125728

(57) **Abstract**

Provided is a technique for achieving both higher functionality and higher precision in a device including a compact drive mechanism. In order to achieve the object, an actuator array sheet comprises a plate-like sheet main body in which a plurality of opening portions penetrating from a front surface to a back surface of the sheet main body are formed in a predetermined arrangement and a movable unit protruded from the sheet main body in each of the opening portions, having a displacement element and a support unit for supporting the displacement element.

## Description

### Technical Field

The present invention relates to an actuator for moving a small-sized object.

### Background Art

In recent years, many small electronic equipments such as cellular phones are each equipped with a camera module, and the trend is directed to further downsizing of the camera module.

Conventionally, such a camera module needs a case for holding a layered body consisting of a lens barrel and a lens holder which support a lens, a holder for supporting an infrared ray (IR) cutting filter, a substrate, an image pickup element, and an optical element and a resin used for sealing the layered body. Therefore, if downsizing of many parts discussed above is carried out, it becomes difficult to combine many parts with high accuracy to manufacture the camera module.

Then, proposed is a technique (in, e.g., Patent document 1) in which a layered member is formed by bonding a substrate, a semiconductor sheet on which a lot of image pickup elements are formed, and a lens array sheet on which a lot of image pickup lenses are formed with a resin layer and dicing of the layered member is performed, to thereby complete camera modules. A camera module having a drive mechanism for an optical system, which uses a thin film-like actuator, is proposed in, e.g., Patent Document 2.

### Prior-Art Documents

### Patent Documents

[Patent Document 1] Japanese Patent Application Laid Open Gazette No. 2007-12995
[Patent Document 2] Japanese Patent Application Laid Open Gazette No. 2007-193248

### Disclosure of Invention

### Problems to be Solved by the Invention

Even for a small-sized camera module, however, higher functionality of the module including various functions such as an autofocus function, a zoom function, and the like is required. The technique of Patent Document 1 does not sufficiently respond to the requirement for higher functionality. The technique of Patent Document 2 ensures higher functionality of a module but has a difficulty in combining a lot of parts with high accuracy to manufacture a camera module.

Such a problem is not limited to a small-sized camera module but is generally common to a device including a compact drive mechanism.

The present invention is intended to solve the above problem, and it is an object of the present invention to provide a technique for achieving both higher functionality and higher precision in a device including a compact drive mechanism.

### Means for Solving the Problems

In order to solve the above problem, the present invention is intended for an actuator array sheet. According to a first aspect of the present invention, the actuator array sheet comprises a plate-like sheet main body in which a plurality of opening potions penetrating from a front surface to a back surface of the sheet main body are formed in a predetermined arrangement and a movable unit protruded from the sheet main body in each of the opening portions, having a displacement element and a support unit for supporting the displacement element.

According to a second aspect of the present invention, in the actuator array sheet of the first aspect, the movable unit includes a portion to be abutted on an object to be moved.

According to a third aspect of the present invention, in the actuator array sheet of the first aspect, the movable unit includes a first movable unit and a second movable unit both of which are protruded from the sheet main body in each of the opening portions.

According to a fourth aspect of the present invention, in the actuator array sheet of the third aspect, the first and second movable units are protruded from opposed inner edge portions of each of the opening portions, respectively.

According to a fifth aspect of the present invention, the actuator array sheet of the third aspect further comprises a connecting wire portion provided on the sheet main body, for electrically connecting the displacement element included in the first movable unit and the displacement element of the second movable unit.

According to a sixth aspect of the present invention, in the actuator array sheet of the first aspect, the sheet main body includes a portion to be bonded to a sheet in which predetermined members are formed in the predetermined arrangement.

According to a seventh aspect of the present invention, the actuator array sheet of the first aspect further comprises a through wire portion provided in the vicinity of each of the opening portions, penetrating the sheet main body, for giving an electric field to each of the displacement elements.

According to an eighth aspect of the present invention, the actuator array sheet of the first aspect further comprises a terminal portion provided at a predetermined portion between adjacent ones of the opening portions on the sheet main body, which is electrically connected to each of the displacement elements and for connecting a wire used for giving an electric field to the displacement element.

According to a ninth aspect of the present invention, in the actuator array sheet of the first aspect, a plurality of chips for actuator unit each including a frame portion which surrounds each of the opening portions and is formed of the sheet main body and at least one the movable unit protruded from the frame portion are formed in a predetermined arrangement and an integrated manner.

According to a tenth aspect of the present invention, in the actuator array sheet of the ninth aspect, a plurality of chips for actuator unit are formed by cutting the sheet main body on a chip-by-chip basis.

### Effects of the Invention

In accordance with the actuator array sheet of any one of the first to tenth aspects, since the actuator array sheet and the sheet in which a plurality of chips each including the object to be moved are formed in a predetermined arrangement can be stacked and bonded and then the sheets can be separated on a chip-by-chip basis, it is possible to achieve both higher functionality and higher precision in a device including a compact drive mechanism.

In accordance with the actuator array sheet of the fifth aspect, it is possible to simplify the structure for giving an electric field to the movable unit.

In accordance with the actuator array sheet of the seventh aspect, if the same through wire portion is provided also in the other sheet on which the actuator array sheet is stacked and bonded in a process for manufacturing a device including a compact drive mechanism, it is possible to easily form a wire portion for giving an electric field to the movable unit with high accuracy.

In accordance with the actuator array sheet of the eighth aspect, it becomes easier to manufacture the actuator array sheet.

### Brief Description of Drawings

[Fig. 1] is a view illustrating an overall structure of a cellular phone including a camera module in accordance with a preferred embodiment of the present invention;
[Fig. 2] is an exploded perspective view showing an exemplary configuration of the camera module in accordance with the preferred embodiment of the present invention;
[Fig. 3] is a plan view showing an exemplary configuration of each of the layers constituting the camera module;
[Fig. 4] is a plan view showing an exemplary configuration of each of the layers constituting the camera module;
[Fig. 5] is a view showing a detailed example of a configuration of an actuator layer;
[Fig. 6] is a view for explanation of an exemplary operation of an actuator portion;
[Fig. 7] is a view showing a structure of the camera module;
[Fig. 8] is a view for explanation of a manner of driving a lens unit included in a third lens layer;
[Fig. 9] is a flowchart showing procedures in a process of manufacturing a camera module;
[Fig. 10] is a plan view showing prepared sheets;
[Fig. 11] is a plan view showing prepared sheets;
[Fig. 12] is an enlarged view showing a partial region of an actuator sheet;
[Fig. 13] is a view for explanation of bonding of a plurality of sheets;
[Fig. 14] is a view showing an exemplary configuration of an actuator layer in accordance with a first specific example of the variations;
[Fig. 15] is a view showing an exemplary configuration of an actuator sheet in accordance with the first specific example of the variations;
[Fig. 16] is a view showing an exemplary modification of the actuator layer in accordance with the first specific example of the variations;
[Fig. 17] is a view showing an exemplary configuration of an actuator layer in accordance with a second specific example of the variations;
[Fig. 18] is a view showing an exemplary configuration of an actuator sheet in accordance with the second specific example of the variations;
[Fig. 19] is a view showing an exemplary modification of the actuator layer in accordance with the second specific example of the variations;
[Fig. 20] is a view showing an exemplary configuration of an actuator layer in accordance with a third specific example of the variations;
[Fig. 21] is a view showing an exemplary configuration of an actuator sheet in accordance with the third specific example of the variations;
[Fig. 22] is a view showing an exemplary modification of the actuator layer in accordance with the third specific example of the variations; and
[Fig. 23] is a view showing an exemplary configuration of an optical pickup device in accordance with the variations.

### Best Mode for Carrying Out the Invention

Hereinafter, the preferred embodiment of the present invention will be discussed with reference to figures.

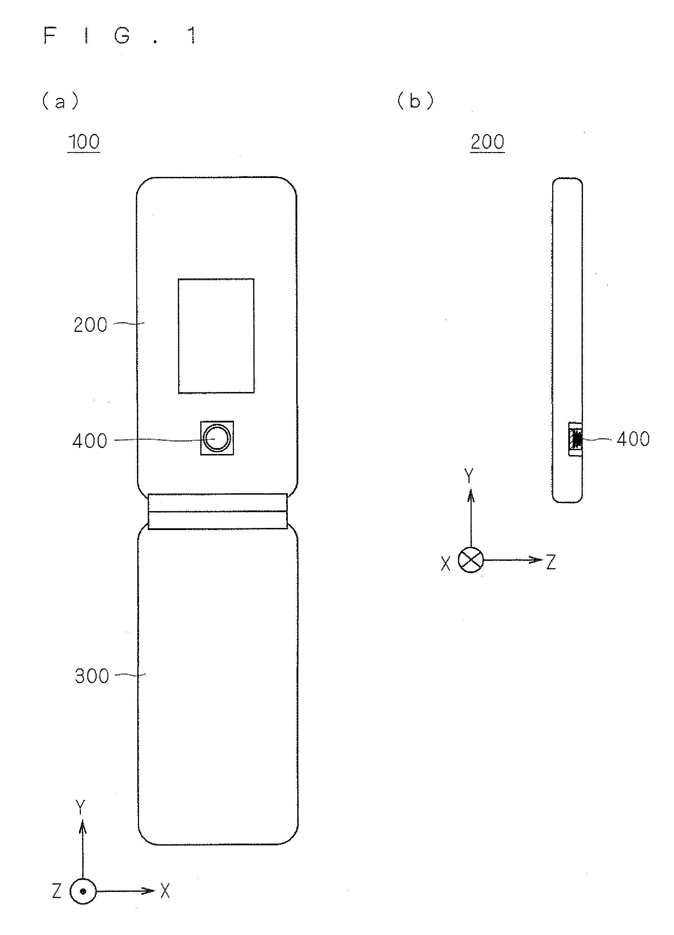

Fig. 1 is a schematic view illustrating an overall structure of a cellular phone 100 equipped with a camera module 400 in accordance with the preferred embodiment of the present invention. In Fig. 1 and the following figures, for clarification of the orientation relation, three axes, i.e., XYZ, which are orthogonal to one another are given as appropriate.

As shown in Fig. 1(a), the cellular phone 100 comprises an image acquisition/reproduction unit 200 and a main body 300. The image acquisition/reproduction unit 200 has the camera module 400 and a display (not shown), and the main body 300 has a control unit for controlling the whole of the cellular phone 100 and various buttons (not shown) such as a ten key. The image acquisition/reproduction unit 200 and the main body 300 are connected by a rotatable hinge unit, whereby the cellular phone 100 is foldable.

Fig. 1(b) is a schematic cross section taken with attention paid to the image acquisition/reproduction unit 200 of the cellular phone 100. As shown in Figs. 1(a) and 1(b), the camera module 400 is a compact image pickup device having an XY cross section of about 5mm square and a thickness (depth in the Z direction) of about 3 mm, i.e., a so-called "micro camera unit (MCU)".

Hereinafter, a configuration of the camera module 400 and a process of manufacturing the module will be discussed sequentially.

### <Configuration of Camera Module>

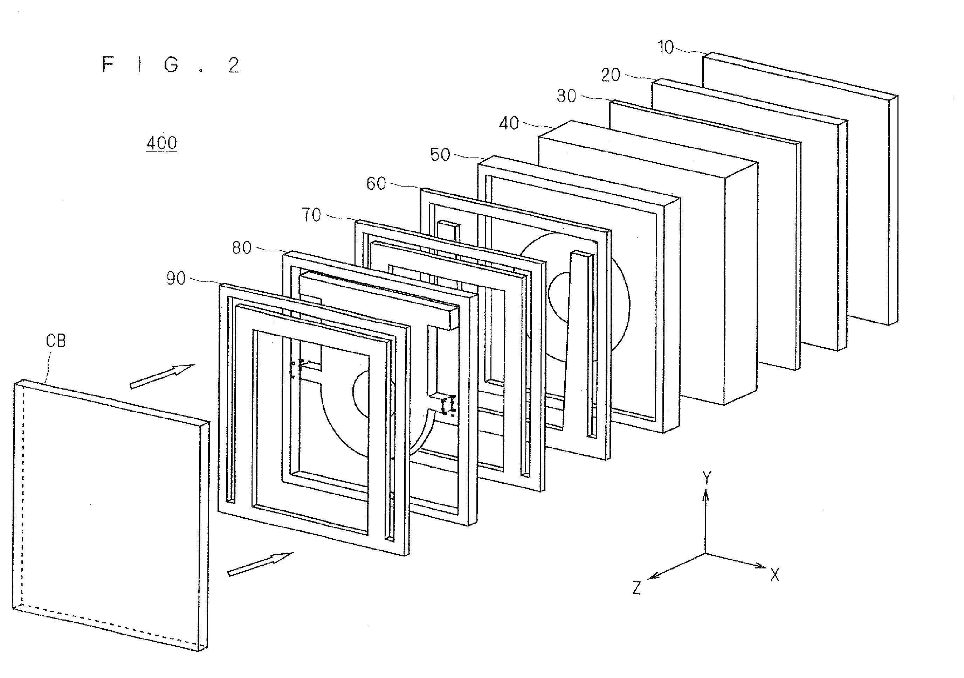

Fig. 2 is an exploded perspective view schematically showing an exemplary configuration of the camera module 400.

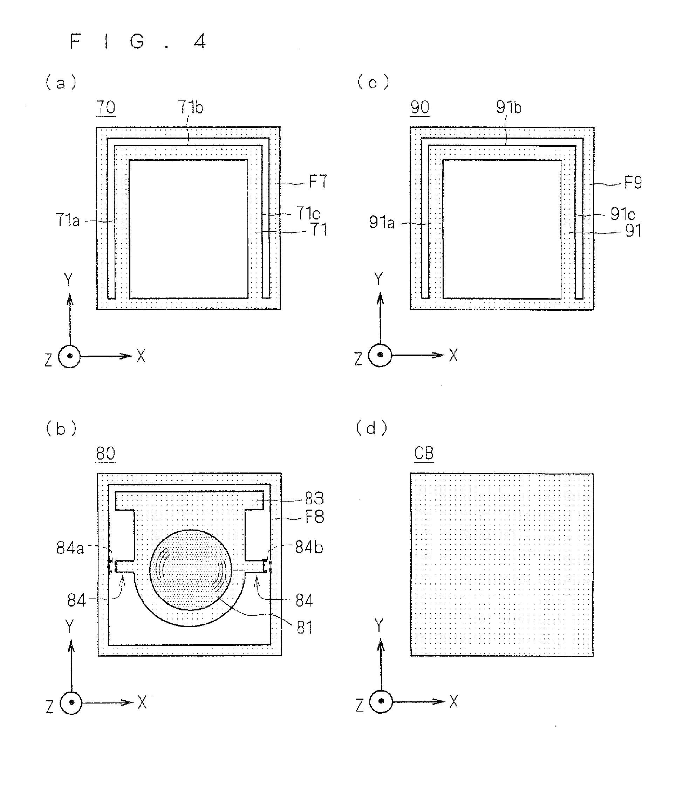

As shown in Fig. 2, in the camera module 400, ten layers, i.e., an image pickup element layer 10, an image pickup sensor holder layer 20, an infrared ray cutting filter layer 30, a first lens layer 40, a second lens layer 50, an actuator layer 60, a parallel spring lower layer 70, a third lens layer 80, a parallel spring upper layer 90, and a protective layer CB are stacked in this order. Since each two adjacent layers included in the ten layers are bonded to each other by a resin such as an epoxy resin, resins are present between the layers. The layers 10 to 90 and CB have almost the same outer shape of rectangle (herein, a square having sides of about 5 mm each) in the surfaces of the ±Z direction. As discussed later, at some midpoint in the process of manufacturing the camera module 400, connecting portions 84 of the third lens layer 80 (see Fig. 4(b)) are cut at portions 84a and 84b indicated by thick broken lines in the figure and a frame portion F8 and a lens unit 81 are separated from each other.

### <Configuration of Each Layer>

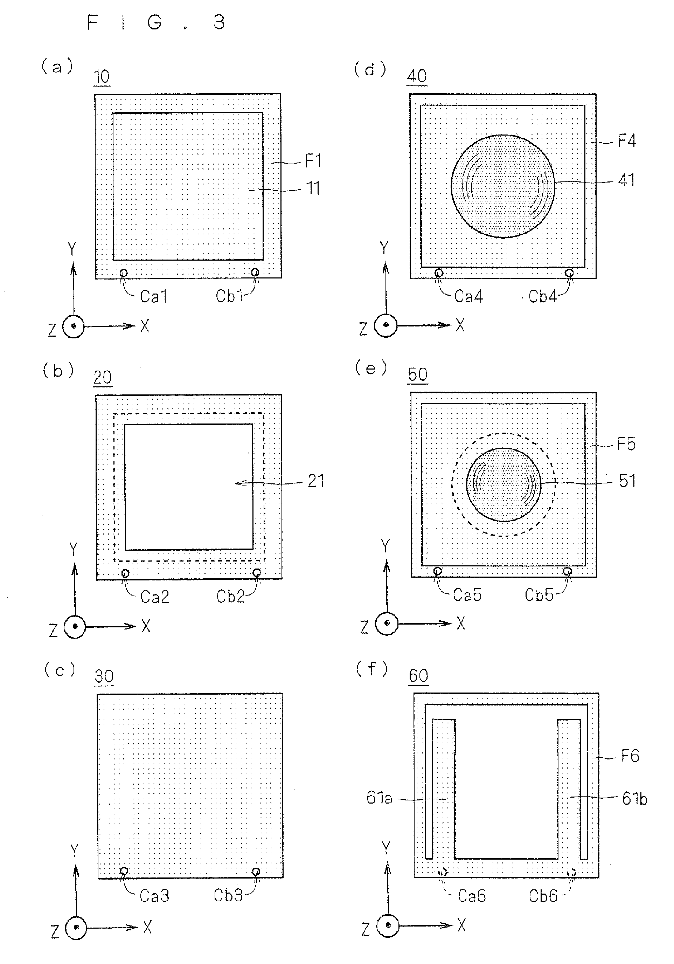

Figs. 3 and 4 are plan views each showing an exemplary configuration of each of the image pickup element layer 10, the image pickup sensor holder layer 20, the infrared ray cutting filter layer 30, the first lens layer 40, the second lens layer 50, the actuator layer 60, the parallel spring lower layer 70, the third lens layer 80, the parallel spring upper layer 90, and the protective layer CB.

### ○ Image Pickup Element Layer 10:

As shown in Fig. 3(a), the image pickup element layer 10 is a chip comprising an image pickup element unit 11 formed of a CMOS sensor, a CCD sensor, or the like and an outer peripheral portion F1 surrounding peripheral circuits thereof and the image pickup element unit 11. Though not shown, various terminals are provided on a back surface of the image pickup element layer 10 (the surface on the -Z side) to connect wires used for giving a signal to the image pickup element unit 11 and reading a signal from the image pickup element unit 11.

At two predetermined portions of the outer peripheral portion F1, provided are microholes (through holes) Ca1 and Cb1 penetrating along the Z direction, and the through holes Ca1 and Cb1 are each filled with a material (conductive material) having conductivity. The inner diameter of each of the micro through holes Ca1 and Cb1 is set at, e.g., several tens of µm. A surface of the image pickup element unit 11 on the +Z side serves as a surface (image pickup surface) for receiving light from a subject, and the outer peripheral portion F1 is bonded to the image pickup sensor holder layer 20 which is adjacent to the image pickup element layer 10 on the +Z side.

### ○ Image Pickup Sensor Holder Layer 20:

As shown in Fig. 3(b), the image pickup sensor holder layer 20 formed of, e.g., a resin is a chip for holding the image pickup element layer 10 which is bonded thereto. Specifically, substantially at the center of the image pickup sensor holder layer 20, an opening 21 having a cross section of substantially square is provided along the Z direction and the size of the cross section of the opening 21 decreases toward the +Z side. The rectangle represented by a broken line in Fig. 3(b) indicates an outer edge of the opening 21 in the surface on the -Z side.

In the same manner as in the image pickup element layer 10, at two predetermined portions of an outer peripheral portion of the image pickup sensor holder layer 20, provided are microholes (through holes) Ca2 and Cb2 penetrating along the Z direction, and the through holes Ca2 and Cb2 are each filled with the conductive material. A surface of the outer peripheral portion of the image pickup sensor holder layer 20 on the -Z side is bonded to the adjacent image pickup element layer 10 and another surface of the outer peripheral portion on the +Z side is bonded to the adjacent infrared ray cutting filter layer 30.

### ○ Infrared Ray Cutting Filter Layer 30:

As shown in Fig. 3(c), the infrared ray cutting filter layer 30 is a chip for filter cutting infrared rays, in which transparent thin films having different refractive indices are layered on a transparent substrate. Specifically, in the infrared ray cutting filter layer 30, for example, a lot of transparent thin films having different refractive indices are formed by sputtering or the like on an upper surface of the substrate formed of glass or a transparent resin. By combination of the thickness and the refractive index of the thin film, the wavelength band of light passing therethrough can be controlled. As the infrared ray cutting filter layer 30, for example, it is desirable to use one that cuts off light having a wavelength band of 600nm or more.

In the same manner as in the image pickup element layer 10 and the like, at two predetermined portions of an outer peripheral portion of the infrared ray cutting filter layer 30, provided are microholes (through holes) Ca3 and Cb3 penetrating along the Z direction, and the through holes Ca3 and Cb3 are each filled with the conductive material. A surface of the outer peripheral portion of the infrared ray cutting filter layer 30 on the -Z side is bonded to the adjacent image pickup sensor holder layer 20 and another surface of the outer peripheral portion on the +Z side is bonded to the adjacent first lens layer 40.

### ○ First Lens Layer 40:

As shown in Fig. 3(d), the first lens layer 40 is a chip in which a lens unit 41 formed of an optical lens having a positive lens power and a frame portion F4 which surrounds the lens unit 41 and serves as an outer peripheral portion of the first lens layer 40 are formed of the same material in an integrated manner. As the material of the first lens layer 40, a phenol resin, an acrylic resin, glass or the like may be used. The lens unit 41 is an optical lens which forms an image so that the focus of the first to third lens layers 40, 50, and 80 may be adapted to the image pickup element unit 11.

In the same manner as in the image pickup element layer 10 and the like, at two predetermined potions of the frame portion F4, provided are microholes (through holes) Ca4 and Cb4 penetrating along the Z direction, and the through holes Ca4 and Cb4 are each filled with the conductive material. A surface of the frame portion F4 on the -Z side is bonded to the adjacent infrared ray cutting filter layer 30 and another surface of the frame portion F4 on the +Z side is bonded to the adjacent second lens layer 50.

### ○ Second Lens Layer 50:

As shown in Fig. 3(e), the second lens layer 50 is a chip in which a lens unit 51 formed of an optical lens having a negative lens power and a frame portion F5 which surrounds the lens unit 51 and serves as an outer peripheral portion of the second lens layer 50 are formed of the same material in an integrated manner. As the material of the second lens layer 50, like the first lens layer 40, a phenol resin, an acrylic resin, glass or the like may be used. Like the lens unit 41, the lens unit 51 is an optical lens which refracts light so that the focus of the first to third lens layers 40, 50, and 80 may be adapted to the image pickup element unit 11.

In the same manner as in the image pickup element layer 10 and the like, at two predetermined portions of the frame portion F5, provided are microholes (through holes) Ca5 and Cb5 penetrating along the Z direction, and the through holes Ca5 and Cb5 are each filled with the conductive material. A surface of the frame portion F5 on the -Z side is bonded to the adjacent first lens layer 40 (specifically, the frame portion F4) and another surface of the frame portion F5 on the +Z side is bonded to the adjacent actuator layer 60.

### ○ Actuator Layer 60:

As shown in Fig. 3(f), the actuator layer 60 is a chip which is provided on the side of the image pickup surface of the image pickup element layer 10 and serves as a unit (actuator unit) comprising thin plate-like actuator portions 61a and 61b ("movable units" of the present invention) for moving the lens unit 81 of the third lens layer 80. In the actuator layer 60, an element for displacement (actuator element) is formed in a thin plate-like manner on a substrate of silicon (Si). In the preferred embodiment, as the actuator element, a shape memory alloy (SMA) is used.

Further, the actuator layer 60 comprises a frame portion F6 which is an outer peripheral portion and the two plate-like actuator portions 61a and 61b protruded from the frame portion F6 toward a hollow portion inside the frame portion F6. Specifically, one end of each of the two actuator portions 61a and 61b is fixed to the frame portion F6 and the frame portion F6 is so formed as to surround the two actuator portions 61a and 61b.

More specifically, the frame portion F6 is formed of four plate-like members including two plate-like members extending substantially in parallel to the X axis and serving as two sides opposed to each other and another two plate-like members extending substantially in parallel to the Y axis and serving as two sides opposed to each other, which are arranged in a square-shaped manner. In an inner edge of part of the frame portion F6 which corresponds to one of the four plate-like members (herein, the plate-like member on the -Y side), one end of the actuator portion 61a is fixed at a predetermined portion (hereinafter, referred to as "one predetermined portion") in the vicinity of the end portion (one end) on the -X side and one end of the actuator portion 61b is fixed at a predetermined portion (hereinafter, referred to as "the other predetermined portion") in the vicinity of the end portion (the other end) on the +X side. Specifically, respective one ends of the two actuator portions 61a and 61b serve as end portions (fixed ends) fixed to the frame portion F6 and the respective other ends of the two actuator portions 61a and 61b serve as end portions (free ends) of which the positions relative to the frame portion F6 can be freely changed.

At two predetermined portions of the frame portion F6 (the same positions as those in the image pickup element layer 10 and the like), provided are micro holes Ca6 and Cb6 penetrating from the back surface (herein, the surface on the -Z side) of the frame portion F6 to some midpoint of the frame portion F6 along the Z direction. A surface of the frame portion F6 on the -Z side is bonded to the adjacent second lens layer 50 (specifically, the frame portion F5) and another surface of the frame portion F6 on the +Z side is bonded to the adjacent parallel spring lower layer 70.

Herein, detailed configuration and operation of the actuator layer 60 will be discussed.

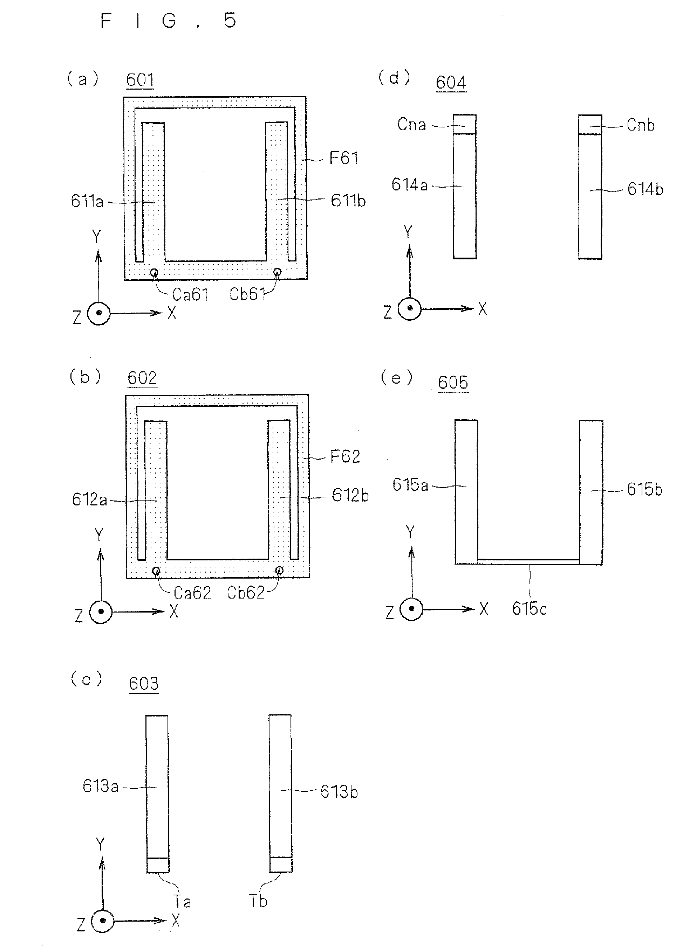

Fig. 5 is a view showing a detailed configuration of the actuator layer 60.

In the actuator layer 60, on a base layer 601 shown in Fig. 5(a), an insulating layer 602 shown in fig 5(b), a first actuator element layer 603 shown in fig 5(c), an insulating/conductive layer 604 shown in fig 5(d), and a second actuator element layer 605 shown in fig 5(e) are stacked in this order.

As shown in Fig. 5(a), the base layer 601 is formed of, for example, a material having appropriate rigidity (e.g., silicon, metal, a resin material such as polyimide) and constituted of a plate-like base member having a frame portion F61 and protruding potions 611a and 611b.

The frame portion F61 is a portion to be bonded and fixed to the second lens layer 50. The protruding portion 611a is a plate-like and arm-like portion protruded from the one predetermined portion of the frame portion F61 and the protruding portion 611b is a plate-like and arm-like portion protruded from the other predetermined portion of the frame portion F61. Each of the protruding portions 611a and 611b is formed in a deformable manner with the vicinity of one end fixed to the frame portion F61 serving as a fulcrum and the other end side being displaced. Though the frame portion F61 and the protruding portions 611a and 611b are formed in an integrated manner in this case, this is only one exemplary structure, and as another example, the protruding portions 611a and 611b may be attached and fixed to the frame portion F61.

Specifically, in this base layer 601, the respective one ends of the protruding portions 611a and 611b are fixed to the frame portion F61, serving as fixed ends, and the respective other ends of the protruding portions 611a and 611b are free ends, and the frame portion F61 is so formed as to surround the protruding portions 611a and 611b. At two predetermined portions of the frame portion F61 (the same positions as those in the image pickup element layer 10 and the like), provided are micro through holes Ca61 and Cab61 along the Z direction, and the through holes Ca61 and Cb61 are each filled with the conductive material.

As shown in Fig. 5(b), the insulating layer 602 is formed of a material having no conductivity (e.g., organic material) and has the same shape as that of the base layer 601. In order to form the insulating layer 602, for example, an organic material having a predetermined thickness is formed entirely on an upper surface of the base layer 601 (the surface on the +Z side) by evaporation using a mask, or the like. Therefore, the insulating layer 602 has a film-like frame portion F62 formed on an upper surface of the frame portion F61 and protruding portions 612a and 612b formed on respective upper surfaces of the protruding portions 611a and 611b. In this case, the frame portion F6 of the actuator layer 60 is mainly constituted of the frame portions F61 and F62 which are layered vertically. At two predetermined portions of the frame portion F62 (the same positions as those in the image pickup element layer 10 and the like), provided are micro through holes Ca62 and Cb62 along the Z direction, and the through holes Ca62 and Cb62 are each filled with the conductive material.

In consideration of the simplicity of manufacture, it is preferable that an insulating layer should be formed on the base layer 601 without the through hole Ca61 or Cb61 and then micro through holes Ca61, Cb61, Ca62, and Cb62 should be formed by embossing or the like at the same time.

As shown in Fig. 5(c), the first actuator element layer 603 has two displacement element units 613a and 613b and two electrode portions Ta and Tb.

The displacement element unit 613a is formed on the protruding portions 611a and 612a and formed of a thin film-like element (herein, a shape memory alloy) which extends and contracts in accordance with application of a voltage. In other words, the protruding portions 611a and 612a serves as a support unit for supporting the displacement element unit 613a. The displacement element unit 613b has the same shape as that of the displacement element unit 613a and is formed on the protruding portions 611b and 612b and formed of a thin film-like element (herein, a shape memory alloy) which extends and contracts in accordance with application of a voltage. In other words, the protruding portions 611b and 612b serves as a support unit for supporting the displacement element unit 613b. The material of the displacement element units 613a and 613b (herein, a shape memory alloy) is different from the material of the base layer 601 (e.g., silicon) in the ratio (the coefficient of linear expansion) of the change in the length in response to the rise of the temperature. The displacement element units 613a and 613b can be formed by e.g., film formation using sputtering, or bonding or crimping a thinly extended foil-like element with an adhesive. As a method of film formation, plating, evaporation or the like may be also used.

The electrode portion Ta is formed of, e.g., a metal or the like having excellent conductivity and electrically connected to the vicinity of an end portion (fixed end) of the displacement element unit 613a on the side of the one predetermined portion to apply a voltage supplied from the conductive material filling the through holes Ca61 and Ca62 to the displacement element unit 613a. In this case, the electrode portion Ta is provided immediately above the through hole Ca62. The electrode portion Tb is formed of, e.g., a metal or the like having excellent conductivity, like the electrode portion Ta, and electrically connected to the vicinity of an end portion (fixed end) of the displacement element unit 613b on the side of the other predetermined portion to apply a voltage supplied from the conductive material filling the through holes Cb61 and Cb62 to the displacement element unit 613b. In this case, the electrode portion Tb is provided immediately above the through hole Cb62.

As shown in Fig. 5(d), the insulating/conductive layer 604 has insulating films 614a and 614b and conductive portions Cna and Cnb.

The insulating film 614a is a film (insulating film) having no electrical conductivity which is formed in a thin film-like manner entirely from the fixed end to some portion on this side just near the free end of an upper surface of the displacement element unit 613a. The insulating film 614b is a film (insulating film) having no electrical conductivity which is formed in a thin film-like manner entirely from the fixed end to some portion on this side just near the free end of an upper surface of the displacement element unit 613b. These insulating films 614a and 614b can be formed by, e.g., evaporation of an organic material with a mask, or the like.

The conductive portion Cna is a film (conductive film) having electrical conductivity which is formed in the vicinity of an end portion (free end) on the side opposite to the one predetermined portion on the upper surface of the displacement element unit 613a. The conductive portion Cnb is a conductive film which is formed in the vicinity of an end portion (free end) on the side opposite to the other predetermined portion on the upper surface of the displacement element unit 613b. These conductive portions Cna and Cnb can be formed by, e.g., film formation using sputtering, or the like.

As shown in Fig. 5(e), the second actuator element layer 605 has two displacement element units 615a and 615b and a wire portion 615c.

The displacement element units 615a and 615b are formed of the same material as that of the displacement element units 613a and 613b, and can be formed by, e.g., film formation using sputtering, or bonding a thinly extended foil-like element with an adhesive. As a method of film formation of the displacement element units 615a and 615b, plating, evaporation or the like may be also used.

The displacement element unit 615a is formed almost entirely on upper surfaces of the insulating film 614a and the conductive portion Cna and the displacement element unit 615b is formed almost entirely on upper surfaces of the insulating film 614b and the conductive portion Cnb. Therefore, the displacement element unit 613a and the displacement element unit 615a are so formed as to sandwich the insulating film 614a and the conductive portion Cna, and the displacement element unit 613a and the displacement element unit 615a are electrically connected to each other with the conductive portion Cna at the vicinity of the free end. The displacement element unit 613b and the displacement element unit 615b are so formed as to sandwich the insulating film 614b and the conductive portion Cnb, and the displacement element unit 613b and the displacement element unit 615b are electrically connected to each other with the conductive portion Cnb at the vicinity of the free end. From another point of view, the protruding portions 611a and 612a serve as a support unit for supporting the displacement element unit 615a and the protruding portions 611b and 612b serve as a support unit for supporting the displacement element unit 615b.

The wire portion 615c is a wire which is provided on the upper surface side of the frame portion F61 (specifically, the upper surface of the frame portion F62) and electrically connects the displacement element units 615a and 615b at the vicinity of the fixed end. The wire portion 615c is formed of, e.g., a metal having excellent conductivity or the like and formed by film formation using sputtering, or the like. Since the displacement element units 613a, 613b, 615a, and 615b are electrically connected in series with the wire portion 615c, it is possible to simplify the structure to give an electric field to the actuator portions 61a and 61b.

The displacement element units 613a, 613b, 615a, and 615b are subjected to a heat treatment (memory heat treatment) so as to memorize the shape so that the displacement element units should be contracted by heating.

Herein, discussion will be made on an operation of the actuator portions 61a and 61b, taking the operation of the actuator portion 61b as an example.

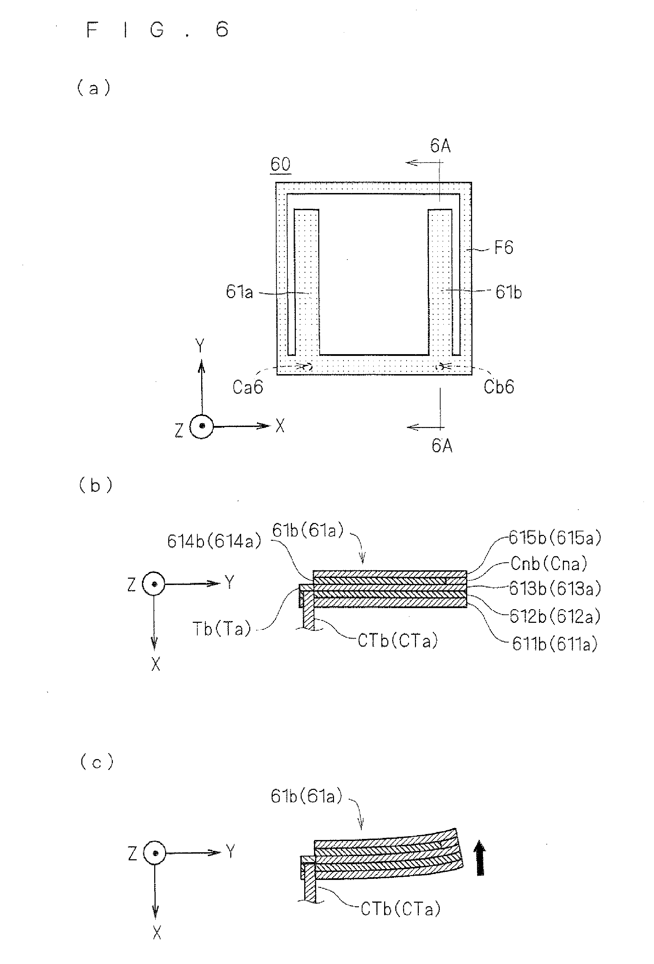

Fig. 6 is a view for explanation of the operation of the actuator portion 61b. Fig. 6(a) is a plan view showing a configuration of the actuator layer 60, like Fig. 3(f), and Figs. 6(b) and 6(c) are schematic cross sections taken with attention paid to the actuator portion 61b as viewed from the cross-section line 6A-6A of Fig. 6(a).

Figs. 6(b) and 6(c) show a through wire portion CTb formed by filling the through holes Cb1 to Cb5, Cb61 and Cb62 with the conductive material. The through wire portion CTb is electrically connected to the displacement element unit 613b via the electrode portion Tb, whereby a voltage is applied to the actuator portion 61b from a power supply circuit (not shown) of the main body 300 through the through wire portion CTb. Also as to the displacement element unit 613a, a through wire portion CTa formed by filling the through holes Ca1 to Ca5, Ca61 and Ca62 with the conductive material is electrically connected to the displacement element unit 613a via the electrode portion Ta, whereby a voltage is applied to the actuator portion 61a from the power supply circuit through the through wire portion CTa.

Herein, the nine elements constituting the two actuator portions 61a and 61b, i.e., the electrode portion Ta, the displacement element unit 613a, the conductive portion Cna, the displacement element unit 615a, the wire portion 615c, the displacement element unit 615b, the conductive portion Cnb, the displacement element unit 613b, and the electrode portion Tb are connected in series in this order between the through wire portions CTa and CTb.

Fig. 6(b) shows a state (an initial state) where the actuator portion 61b is not deformed. In the initial state, no voltage is applied to the displacement element units 613b and 615b and the displacement element units 613b and 615b are in a room temperature state. Therefore, with the elastic force of the protruding portion 611b of the base layer 601, the displacement element units 613b and 615b are made like a plate and the actuator portion 61b is almost flat.

When a voltage is applied to the displacement element units 613b and 615b from the initial state of Fig. 6(b), a current flows in the displacement element units 613b and 615b, and the displacement element units 613b and 615b are heated by Joule heat. When the temperature of the displacement element units 613b and 615b exceeds a predetermined transformation start temperature, the displacement element units 613b and 615b are contracted. At that time, there arises a difference between the extending distance of the displacement element units 613b and 615b and that of the protruding portion 611b, and as shown in Fig. 6(c), the actuator portion 61b is deformed with the free end thereof shifted upward.

When the application of a voltage to the displacement element units 613b and615b is finished, the extending distance of the displacement element units 613b and 615b returns to the initial state by natural cool-down and the actuator portion 61b returns to the initial state where the unit is not deformed. Thus, with an electric field given thereto, the actuator portion 61b is deformed so that the free end thereof may be moved with the portion in contact with the frame portion F6 as a fulcrum and thereby serves as a driving unit for generating a driving force. Then, the actuator portion 61a directly or indirectly abuts on the object to be moved and exerts an external force on the object, to thereby move the object.

In this case, the two actuator portions 61a and 61b are electrically connected to each other with the wire portion 615c and ohmically heated at the same time. Therefore, the two actuator portions 61a and 61b are deformed in almost the same manner at almost the same timing by almost the same mechanism.

### ○ Parallel Spring Lower Layer 70:

As shown in Fig. 4(a), the parallel spring lower layer 70 is a chip which is formed of a metal material such as phosphor bronze and has a frame portion F7 and an elastic portion 71. The parallel spring lower layer 70 is a layer (elastic layer) serving as a spring mechanism.

The frame portion F7 is an outer peripheral portion of the parallel spring lower layer 70. A surface of the frame portion F7 on the -Z side is bonded to the adjacent actuator layer 60 (specifically, the frame portion F6) and another surface of the frame portion F7 on the +Z side is bonded to the adjacent third lens layer 80.

In the elastic portion 71, three plate-like members 71a, 71b, and 71c extending almost linearly are connected to one another in a substantially U-shaped manner, and respective one ends of two of the three plate-like members 71a, 71b, and 71c on both sides, i.e., both ends of the elastic portion 71 are fixed to two portions of the frame portion F7. In this case, since the elastic portion 71 is arranged in a hollow portion inside the frame portion F7, the frame portion F7 is so formed as to surround the elastic portion 71.

More specifically, like the frame portion F6, the frame portion F7 is formed of four plate-like members including two plate-like members extending substantially in parallel to the X axis and serving as two sides opposed to each other and another two plate-like members extending substantially in parallel to the Y axis and serving as two sides opposed to each other, which are arranged in a square-shaped manner. In an inner edge of part of the frame portion F7 which corresponds to one of the four plate-like members (herein, the plate-like member on the -Y side), one end of the elastic portion 71 (specifically, one end of the plate-like member 71a) is fixed at a predetermined portion (hereinafter, referred to as "one predetermined portion") in the vicinity of the end portion (one end) on the -X side and the other end of the elastic portion 71 (specifically, one end of the plate-like member 71c) is fixed at a predetermined portion (hereinafter, referred to as "the other predetermined portion") in the vicinity of the end portion (the other end) on the +X side.

Lower surfaces (surfaces on the -Z side) of the two plate-like members 71a and 71c on both sides among the three plate-like members 71a, 71b, and 71c constituting the elastic portion 71 abut on the upper surfaces (surfaces on the +Z side) of the actuator portions 61a and 61b. Therefore, the two plate-like members 71a and 71 are elastically deformed so that the position of the plate-like member 71b relative to the frame portion F7 may be shifted toward the +Z side in accordance with the deformation of the actuator portions 61a and 61b as shown in Fig. 6.

### ○ Third Lens Layer 80:

As shown in Fig. 4(b), the third lens layer 80 is a chip having the frame portion F8, the lens unit 81, and a lens holding unit 83. As the material of the third lens layer 80, like the first and second lens layers 40 and 50, a phenol resin, an acrylic resin, glass or the like may be used.

The frame portion F8 is an outer peripheral portion of the third lens layer 80. Specifically, the frame portion F8 is formed of four plate-like members including two plate-like members extending substantially in parallel to the X axis and serving as two sides opposed to each other and another two plate-like members extending substantially in parallel to the Y axis and serving as two sides opposed to each other, which are arranged in a square-shaped manner. The lens unit 81 and the lens holding unit 83 are arranged in a hollow portion inside the frame portion F8 and surrounded by the frame portion F8. A surface of the frame portion F8 on the -Z side is bonded to the adjacent parallel spring lower layer 70 (specifically, the frame portion F7) and another surface of the frame portion F8 on the +Z side is bonded to the adjacent parallel spring upper layer 90.

The lens unit 81 is an optical lens of which the distance from the image pickup element unit 11 is changeable, which has a positive lens power in this case.

The lens holding unit 83 holds the lens unit 81 and is held between the elastic portion 71 of the parallel spring lower layer 70 and the elastic portion 91 of the parallel spring upper layer 90 discussed later. Specifically, for example, the lens holding unit 83 and the lens unit 81 are formed in an integrated manner and the elastic portion 71 is bonded to a surface on the -Z side of an end portion of the lens holding unit 83 on the +Y side and the elastic portion 91 is bonded to another surface on the +Z side.

As to the third lens layer 80, as shown in Fig. 4(b), at some midpoint in the process of manufacturing the camera module 400, the connecting portions 84 of the third lens layer 80 are cut at the portions 84a and 84b indicated by thick broken lines in the figure and the lens unit 81 and the lens holding unit 83 are separated from the frame portion F8, whereby the third lens layer 80 is formed. Further discussion will be made later on the cutting of the connecting portions 84.

### ○ Parallel Spring Upper Layer 90:

As shown in Fig. 4(c), the parallel spring upper layer 90 is a chip having the same structure as that of the parallel spring lower layer 70, which is formed of a metal material such as phosphor bronze and has a frame portion F9 and an elastic portion 91. The parallel spring upper layer 90 is a layer (elastic layer) serving as a spring mechanism.

The frame portion F9 is an outer peripheral portion of the parallel spring upper layer 90. A surface of the frame portion F9 on the -Z side is bonded to the adjacent third lens layer 80 (specifically, the frame portion F8) and another surface of the frame portion F9 on the +Z side is bonded to the adjacent protective layer CB.

In the elastic portion 91, like in the elastic portion 71, three plate-like members 91a, 91b, and 91c extending almost linearly are connected to one another in a substantially U-shaped manner, and respective one ends of two of the three plate-like members 91a, 91b, and 91c on both sides, i.e., both ends of the elastic portion 91 are fixed to two portions of the frame portion F9. In this case, since the elastic portion 91 is arranged in a hollow portion inside the frame portion F9, the frame portion F9 is so formed as to surround the elastic portion 91. Specific structure of the frame portion F9 is the same as that of the above-discussed frame portion F7 and therefore discussion thereof will be omitted.

A lower surface (surface on the -Z side) of the center one of the three plate-like members 91a, 91b, and 91c constituting the elastic portion 91 is bonded to the lens holding unit 83, whereby the lens holding unit 83 is held between the elastic portion 71 and the elastic portion 91. Then, the two plate-like members 91a and 91c are elastically deformed so that the position of the plate-like member 91b relative to the frame portion F9 may be shifted toward the +Z side in accordance with the deformation of the actuator portions 61a and 61b as shown in Fig. 6.

### ○ Protective Layer CB:

As shown in Fig. 4(d), the protective layer CB is a plate-like transparent member of which the plate surface has a substantially square shape and is formed of, e.g., a resin, glass, or the like. A surface of an outer peripheral portion of the protective layer CB on the -Z side is bonded to the adjacent parallel spring upper layer 90 (specifically, the frame portion F9). The outer peripheral portion of the protective layer CB may have a structure, for example, having a projecting shape along the outer periphery to be bonded at a top surface of the projecting shape.

### <Structure of Completed Camera Module>

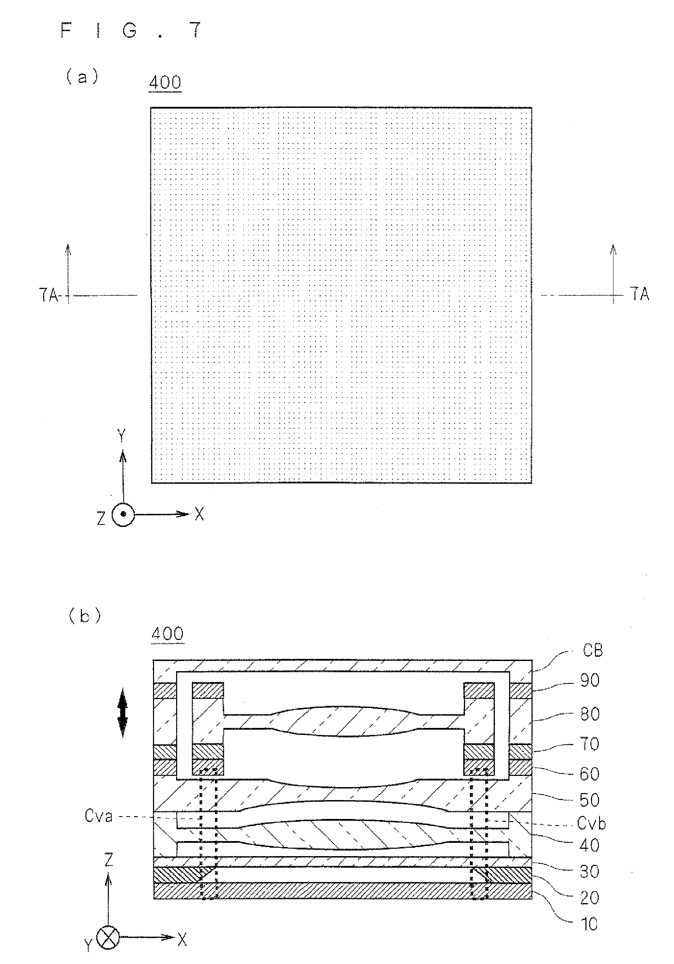

Fig. 7 is a view showing a structure of the camera module 400. In more detail, Fig. 7(a) is a plan view of the camera module 400 as viewed from the side of the protective layer CB (the upper side) and Fig. 7(b) is a schematic cross section as viewed from the cross-section line 7A-7A of Fig. 7(a). In Fig. 7(b), one through hole Cva formed by linkage of the through holes Ca1 to Ca5, Ca61, and Ca62 and another through hole Cvb formed by linkage of the through holes Cb1 to Cb5, Cb61, and Cb62, which are located on the -Y side more closely than the section are each represented by a broken line so as to clarify the positional relation of these two through holes.

As shown in Fig. 7(b), ten layers, i.e., the image pickup element layer 10, the image pickup sensor holder layer 20, the infrared ray cutting filter layer 30, the first lens layer 40, the second lens layer 50, the actuator layer 60, the parallel spring lower layer 70, the third lens layer 80, the parallel spring upper layer 90, and the protective layer CB are stacked in this order, to thereby form the camera module 400. The through holes Cva and Cvb are each filled with the conductive material, whereby a voltage supplied from the back surface (surface on the -Z side) of the image pickup element layer 10 can be applied to the actuator portions 61a and 61b of the actuator layer 60.

The camera module 400 is manufactured by using, e.g., a micromachining technique which is used for integration of microdevices. This technique is a kind of semiconductor processing technique and generally referred to as "MEMS (Micro Electro Mechanical Systems)". Fields using the processing technique, "MEMS", include fields for manufacturing microsensors, actuators, and electrical and mechanical structures which have a size of µm order by using a semiconductor process, particularly, a micromachining technique to which a circuit integration technology is applied. A method of manufacturing the camera module 400 will be discussed later.

### <Manner of Driving Lens Unit>

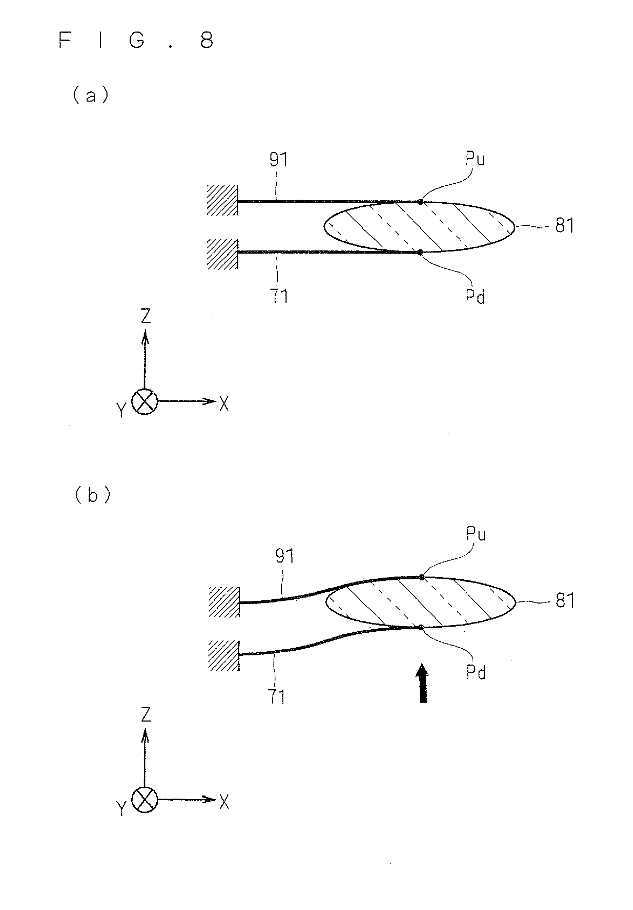

Fig. 8 is a view for explanation of a manner of driving the lens unit 81 included in the third lens layer 80. Fig. 8 is a schematic view of the state of the lens unit 81 and the elastic portions 71 and 91 as viewed from the side. Though the lens holding unit 83 is held between the elastic portions 71 and 91 in an actual case, Fig. 8 shows, for simple explanation, a state where the elastic portions 71 and 91 hold the lens unit 81 at points Pu and Pd. Fig. 8(a) shows a state (initial state) where the elastic portions 71 and 91 are not deformed, and Fig. 8(b) shows a state (deformation state) where the elastic portions 71 and 91 are deformed.

As discussed above, the elastic portions 71 and 91 have the same structure and are fixed to the frame portions F7 and F9, respectively, at two portions in the same manner. With the deformation of the actuator portions 61a and 61b, when the elastic portion 71 is deformed in such a manner that the plate-like member 71b goes upward, the elastic portion 91 is also deformed in the same manner with the lens unit 81 interposed therebetween. At that time, it can be thought that this is a state where the lens unit 81 is held by the plate-like members 71a and 91a and the plate-like members 71c and 91c which are provided in parallel away from each other at a predetermined distance, and the plate-like members 71a and 91a and the plate-like members 71c and 91c are deformed at almost the same timing in almost the same manner. Therefore, the lens unit 81 moves vertically (herein, in the direction along the Z axis) without the optical axis thereof being inclined. In other words, without shifting the direction of the optical axis of the lens unit 81, it is possible to change the distance between the lens unit 81 and the image pickup element unit 11. As a result, the distance between the image pickup element unit 11 and the lens unit 81 is changed, whereby a focus adjustment is carried out.

### <Process for Manufacturing Camera Module>

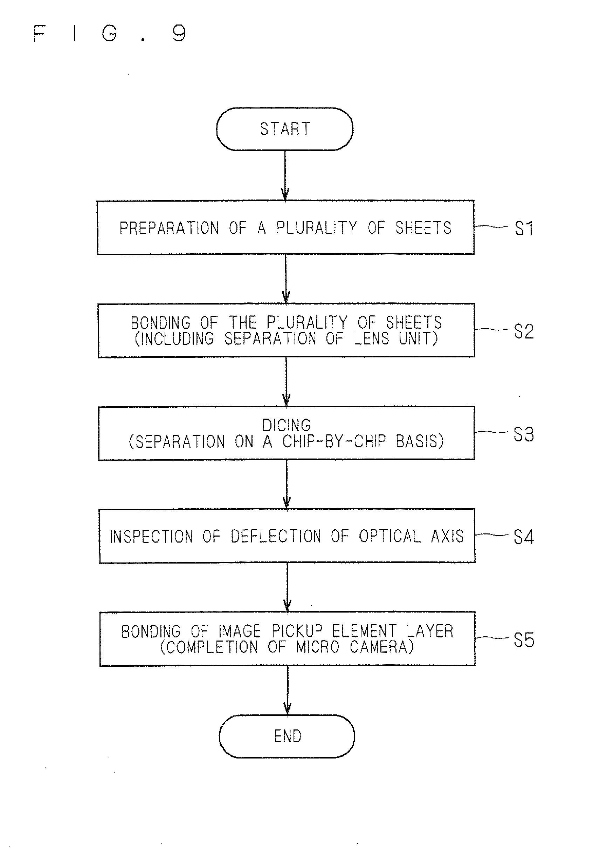

Fig. 9 is a flowchart showing procedures in a process of manufacturing the camera module 400. As shown in Fig. 9, (Process A) preparation of a plurality of sheets (Step S1), (Process B) Bonding of the plurality of sheets (Step S2), (Process C) dicing (Step S3), (Process D) inspection of deflection of optical axis (Step S4), and (Process E) bonding of image pickup element layer (Step S5) are sequentially performed, to thereby manufacture the camera module 400. Hereinafter, the process steps will be discussed.

### ○ Preparation of a Plurality of Sheets (Process A):

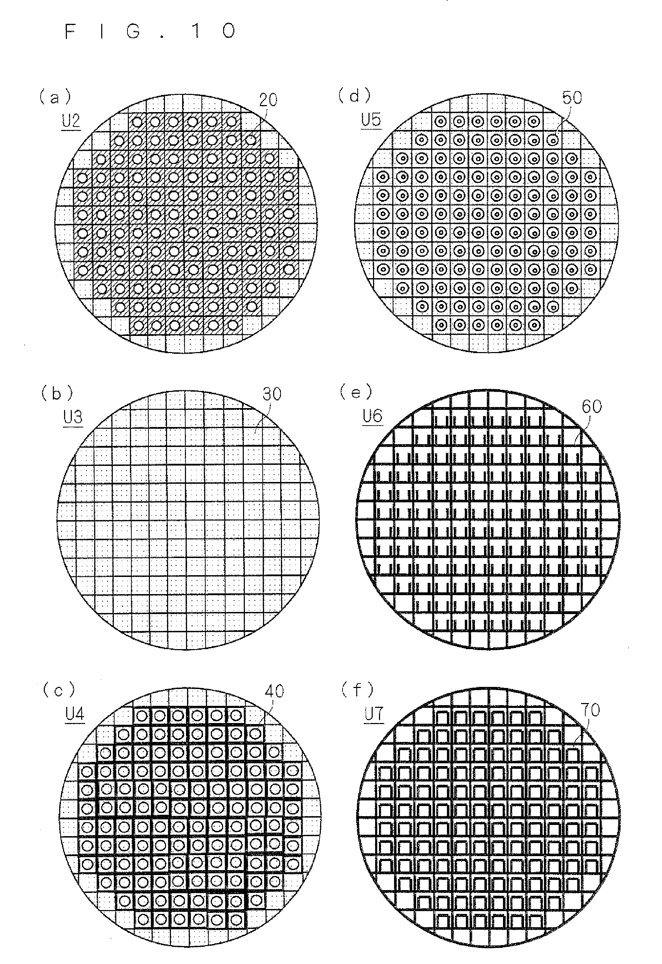

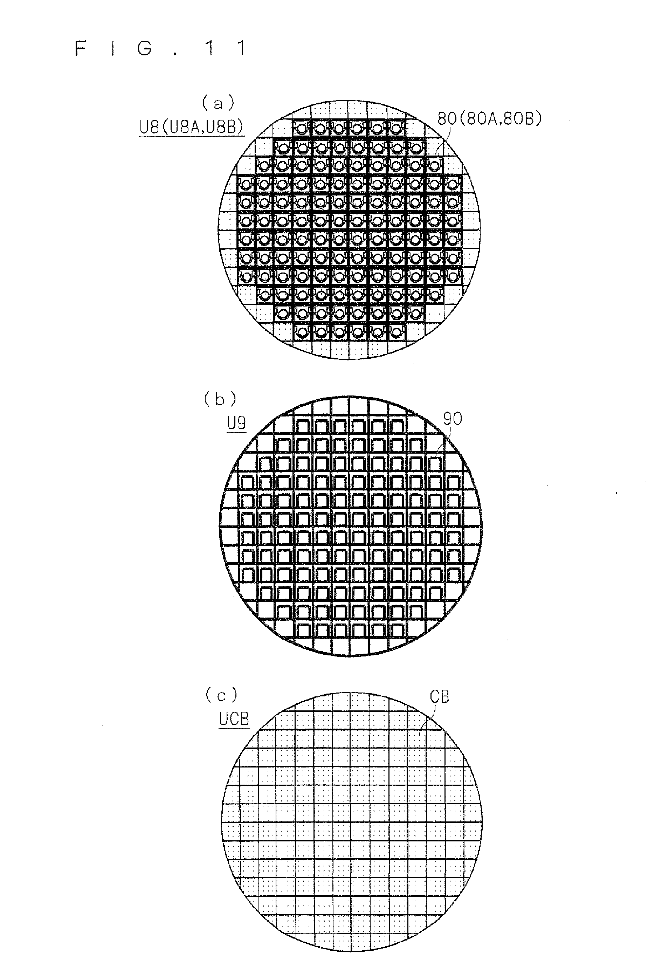

Figs. 10 and 11 are plan views showing exemplary structures of prepared ten sheets U2 to U9 and UCB. In this exemplary case, each of the sheets U2 to U9 and UCB has a disc-like shape.

Fig. 10(a) is a view illustrating the sheet (image pickup sensor holder sheet) U2 in which a lot of chips each of which corresponds to the image pickup sensor holder layer 20 shown in Fig. 3(b) are formed in a predetermined arrangement (herein, in a matrix). Herein, the term "predetermined arrangement" refers to a state where a lot of chips are arranged in predetermined directions at predetermined intervals. The image pickup sensor holder sheet U2 is formed of, e.g., a resin material and manufactured by press working using a metal mold. The through holes Ca2 and Cb2 are formed by, e.g., embossing, etching, or the like. Each of the image pickup sensor holder layers 20 corresponds to a predetermined member on which the image pickup element layer 10 having the image pickup element unit 11 is mounted.

Fig. 10(b) is a view illustrating the sheet (infrared ray cutting filter sheet) U3 in which a lot of chips each of which corresponds to the infrared ray cutting filter layer 30 shown in Fig. 3(c) are formed in a predetermined arrangement (herein, in a matrix). The infrared ray cutting filter sheet U3 is manufactured by stacking a lot of transparent thin films having different refractive indices on a transparent substrate. Specifically, first, a substrate formed of glass or a transparent resin, to be used as a substrate for the filter, is prepared and a lot of transparent thin films having different refractive indices are stacked by sputtering, evaporation, or the like. By changing the combination of the thickness and the refractive index of the transparent thin film as appropriate, the wavelength band of light passing therethrough can be set. In this case, setting is so made as not to pass light having a wavelength band of 600nm or more, and infrared rays are thereby cut off.
The through holes Ca3 and Cb3 are formed by, e.g., embossing, etching, or the like.

Fig. 10(c) is a view illustrating the sheet (first lens sheet) U4 in which a lot of chips each of which corresponds to the first lens layer 40 shown in Fig. 3(d) are formed in a predetermined arrangement (herein, in a matrix), and Fig. 10(d) is a view illustrating the sheet (second lens sheet) U5 in which a lot of chips each of which corresponds to the second lens layer 50 shown in Fig. 3(e) are formed in a predetermined arrangement (herein, in a matrix). The first and second lens sheets U4 and U5 are formed of, e.g., a phenol resin, an acrylic resin, or optical glass and manufactured by molding, etching, or the like. The through holes Ca4, Ca5, Cb4 and Cb5 are formed by, e.g., embossing, etching, or the like. If it is intended to form a diaphragm in the camera module 400, for example, a thin film of light shielding material may be formed by using a shadow mask, or the diaphragm may be formed by using a resin material which is colored in black.

Fig. 10(e) is a view illustrating the sheet (actuator sheet) U6 in which a lot of chips each of which corresponds to the actuator layer 60 shown in Fig. 3(f) are formed in a predetermined arrangement (herein, in a matrix) and an integrated manner. The actuator sheet U6 corresponds to an "actuator array sheet" of the present invention and is manufactured by, e.g., forming a thin film of shape memory alloy (SMA) which corresponds to the actuator element on a substrate of silicon (Si) or the like by a technique such as the MEMS. A lot of chips of the actuator layers 60 are formed at the same time by a technique such as the MEMS. Hereinafter, a specific case will be discussed.

First, by etching the thin plate of silicon (or a metal) as appropriate, formed is a base plate in which a lot of above-discussed base layers 601 (Fig. 5(a)) are formed in a predetermined arrangement (herein, in a matrix). The base layer 601 may be formed of a thin plate of polyimide or the like, instead of the thin plate of silicon (silicon substrate).

Next, an insulating film is formed on the base plate by using photolithography. Thus, the insulating layer 602 (Fig. 5(b)) is formed on each of the base layers 601. The through holes Ca61, Ca62, Ca61, and Cb61 are formed by, e.g., embossing, etching, or the like. At that time, the hole portion Ca6 formed of the through holes Ca61 and Ca62 which are connected to each other in an integrated manner and the hole portion Cb6 formed of the through holes Cb61 and Cb62 which are connected to each other in an integrated manner are plated with a metal (e.g., gold). The through holes Ca61 and Cb61 may be formed by, e.g., performing etching such as DRIE (Deep Reactive Ion Etching) of the thin plate of silicon.

Subsequently, the actuator element layer 603 (Fig. 5(c)) is formed by, e.g., sputtering (or evaporation). At that time, on each of the insulating layers 602, formed are displacement element units 613a and 613b and the electrode portions Ta and Tb.

Next, with formation of the insulating film by photolithography and formation of the metal thin film by sputtering (or evaporation), the insulating/conductive layer 604 (Fig. 5(d)) is formed. At that time, on the displacement element units 613a and 613b and the electrode portions Ta and Tb, formed are the insulating films 614a and 614b and the conductive portions Cna and Cnb.

Subsequently, the second actuator element layer 605 (Fig. 5(e)) is formed by, e.g., sputtering (or evaporation). At that time, on the insulating films 614a and 614b and the conductive portions Cna and Cnb, formed are the displacement element units 615a and 615b and the wire portion 615c for conductively connecting the displacement element units 615a and 615b to each other. Then, the actuator portions 61a and 61b are set in a shape to be memorized and heated at a predetermined temperature (e.g., about 600 °C) (shape memory treatment).

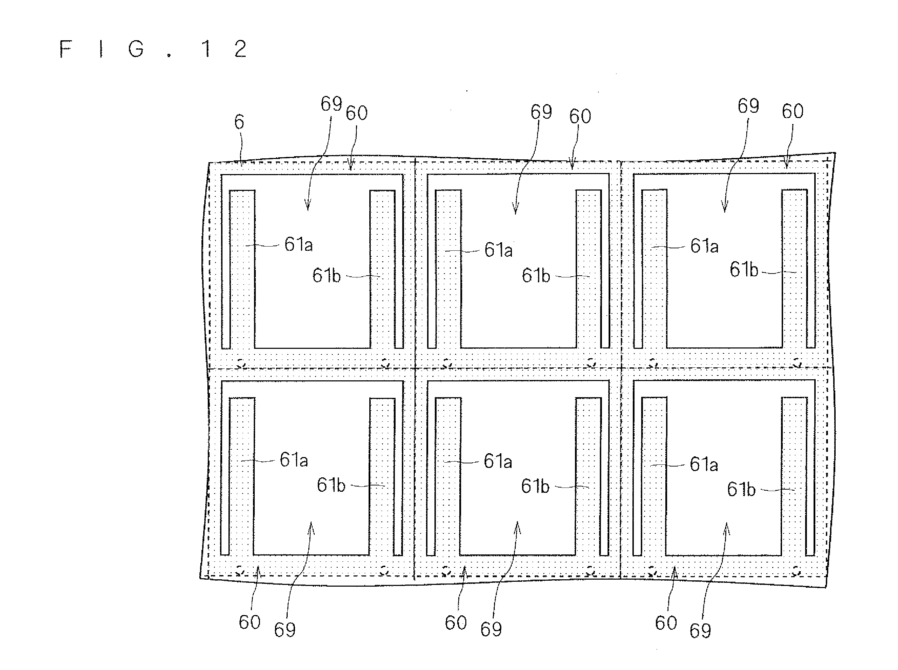

Fig. 12 is a schematic plan view showing an enlarged partial region of the actuator sheet U6. Fig. 12 shows the partial region in which chips which correspond to six actuator layers 60 in the actuator sheet U6 are formed.

As shown in Figs. 10(e) and 12, chips which correspond to a plurality of actuator layers 60 are formed in a predetermined arrangement in a plate-like sheet main body 6 having a substantially circular outer shape and border lines therebetween are represented by broken lines. In the portion which corresponds to each chip, formed is an opening portion 69 penetrating from a front surface to a back surface thereof, and in each opening portion 69, two actuator portions 61a and 61b are protruded from the sheet main body 6. As shown in Fig. 5, one actuator portion 61a has the displacement element units 613a and 615a and the protruding portion 611a for supporting the displacement element units 613a and 615a, and another actuator portion 61b has the displacement element units 613b and 615b and the protruding portion 611b for supporting the displacement element units 613b and 615b.

From another point of view, as shown in Fig. 5, in the state of the actuator sheet U6, each chip of the actuator layer 60 includes the frame portion F6 which is so formed of the sheet main body 6 as to surround the opening portion 69 and the actuator portions 61a a and 61b protruded from the frame portion F6. As shown in Fig. 5, the wire portion 615c (which corresponds to a "connecting wire portion" of the present invention) for electrically connecting the displacement element units 615a and 615b to each other is formed on the sheet main body 6. As shown in Fig. 6, in the vicinity of each opening portion 69, the through wire portion CTb (which corresponds to a "through wire portion" of the present invention) penetrating the frame portions F61 and F62 in the sheet main body 6 is so formed as to give an electric field to the displacement element units 613a, 613b, 615a, and 615b.

Fig. 10(f) is a view illustrating the sheet (parallel spring lower sheet) U7 in which a lot of chips each of which corresponds to the parallel spring lower layer 70 shown in Fig. 4(a) are formed in a predetermined arrangement (herein, in a matrix), and Fig. 11(b) is a view illustrating the sheet (parallel spring upper sheet) U9 in which a lot of chips each of which corresponds to the parallel spring upper layer 90 shown in Fig. 4(c) are formed in a predetermined arrangement (herein, in a matrix). The parallel spring lower sheet U7 and the parallel spring upper sheet U9 are manufactured by, e.g., performing etching or the like on a thin plate formed of a metal material such as phosphor bronze.

Fig. 11(a) is a view illustrating the sheet (third lens sheet) U8 in which a lot of chips each of which corresponds to the third lens layer 80 shown in Fig. 4(b) are formed in a predetermined arrangement (herein, in a matrix). The third lens sheet U8 is formed of e.g., a phenol resin, an acrylic resin, optical glass and manufactured by moulding, etching, or the like.

Fig. 11(c) is a view illustrating the sheet (protective sheet) UCB in which a lot of chips each of which corresponds to the protective layer CB shown in Fig. 4(d) are formed in a predetermined arrangement (herein, in a matrix). The protective sheet UCB is a flat sheet manufactured by, e.g., preparing a resin (or glass) which is a transparent material having a desired thickness and etching the material as appropriate.

In the ten prepared sheets U2 to U9 and UCB, marks (alignment marks) used for alignment in the process of bonding the sheets are given at almost the same positions. As the alignment mark, for example, a mark such as cross or the like may be used and it is desirable that the marks should be provided at two or more positions in the vicinity of the outer peripheral portion on the upper surface of each of the sheets U2 to U9 and UCB, which are relatively distant from one another.

### ○ Bonding of the Plurality of Sheets (Process B):

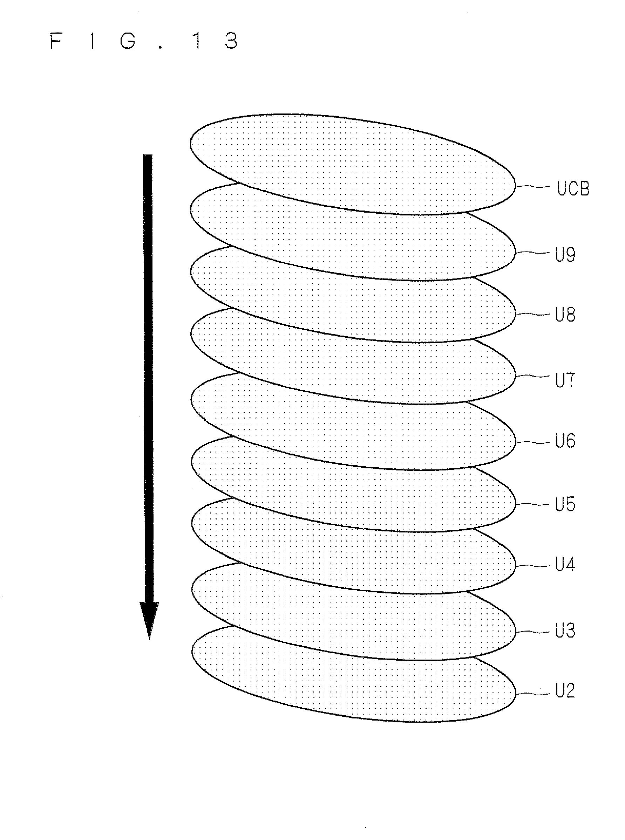

Fig. 13 is a view schematically showing a process for sequentially stacking and bonding the plurality of sheets U2 to U9 and UCB.

First, the image pickup sensor holder sheet U2, the infrared ray cutting filter sheet U3, the first lens sheet U4, and the second lens sheet U5 are aligned in a sheet form so that the chips of the sheets U2 to U5 may be stacked straightly. For ensuring the accuracy of the optical system constituted of the lens units 41, 51, and 81, it is desirable that the amount of deviation (i.e., deflection accuracy) of the optical axes of the three lens units 41,51, and 81 should be within 5 µm.

Specifically, first, the image pickup sensor holder sheet U2 and the infrared ray cutting filter sheet U3 are set in a well-known aligner device and alignment is performed by using alignment marks formed in advance. At that time, a so-called epoxy resin adhesive or ultraviolet curing adhesive is applied to the surfaces (bonding surfaces) of the image pickup sensor holder sheet U2 and the infrared ray cutting filter sheet U3 to be bonded to each other in advance and these sheets U2 and U3 are bonded to each other. Another method of directly bonding these sheets U2 and U3 to each other may be used, in which O₂ plasma is applied to the bonding surfaces to thereby activate the bonding surfaces. In consideration of an increase of the productivity of the camera module 400 and reduction of the manufacturing cost thereof to be achieved by bonding a plurality of layers in a short time and a simple manner, it is preferable to use the above resin adhesive.

Subsequently, by the same alignment and bonding method as above, the first lens sheet U4 is bonded on the infrared ray cutting filter sheet U3 and further, the second lens sheet U5 is bonded on the first lens sheet U4.

In this case, in the sheets U2 to U5, provided are the through holes Ca2 to Ca5 and Cb2 to Cb5 which penetrate predetermined positions of the chips, and with the stacking and bonding of the four sheets U2 to U5, a through hole constituted of the through holes Ca2 to Ca5 which are connected to one another in an integrated manner and a through hole constituted of the through holes Cb2 to Cb5 which are connected to one another in an integrated manner are formed in one row of chips which are vertically stacked. For the two through holes in one row of chips in the four sheets U2 to U5, wires each of which is vertically conductive are formed, respectively, by placing a shadow mask or the like on a portion other than the through holes and performing electroless plating using a metal (e.g., gold). These wires serve as wire portions to give an electric field to the actuator portions 61a and 61b.

Next, on an upper surface of the layered body in which the four sheets U2 to U5 are stacked, the actuator sheet U6, the parallel spring lower sheet U7, the third lens sheet U8, and the parallel spring upper sheet U9 are stacked and bonded in this order from the lower side. The alignment and bonding method is the same as the method performed for the sheets U2 and U3, and at that time, the chips in the sheets U2 to U9 are stacked straightly.

At that time, in the actuator sheet U6, substantially the whole of (part of) the upper and lower surfaces of the sheet main body 6 are bonded to the adjacent second lens sheet U5 and the adjacent parallel spring lower sheet U7. The parallel spring lower sheet U7 has a structure in which predetermined members (herein, elastic portions 71) included in the object to be moved are formed in a predetermined arrangement and the actuator portions 61a and 61b of the actuator sheet U6 abut on the elastic portion 71.

Further, at that time, the lens unit 81 of the third lens sheet U8 is supported by the actuator portions 61a and 61b of the actuator sheet U6 with the elastic portion 71 of the parallel spring lower sheet U7 interposed therebetween. Since the sheets U7 to U9 are stacked and bonded to one another, the lens holding unit 83 is held by the elastic portions 71 and 91 from the upper and lower surfaces and the lens unit 81 is supported by the elastic portions 71 and 91. At that time, in each chip of the third lens sheet U8, the connecting portions 84 (see Fig. 4(b)) for connecting the frame portion F8 and the lens unit 81 with the lens holding unit 83 interposed therebetween are cut by using so-called femtosecond laser or the like, whereby the frame portion F8 and the lens unit 81 are separated from each other. The connecting portions 84 are cut at respective parts 84a and 84b (represented by thick broken lines of Fig. 4(b)) thereof on the side of the frame portion F8.

Thus, in the sheets in which a plurality of chips are formed, the lens unit 81 of each chip is supported by the elastic portions 71 and 91 and then the lens unit 81 becomes movable. Therefore, it is possible to perform the alignment of the lens unit 81 and the actuator portions 61a and 61b with high accuracy. In other words, it becomes possible to prevent, for example, the deflection of the optical axis of the lens unit in each optical unit (discussed later) or the like.

Finally, on an upper surface of the parallel spring upper sheet U9, the protective sheet UCB is aligned and bonded in the same manner and method as above. Thus, a member (layered member) in which the nine sheets U2 to U9 and UCB are stacked are formed.

### ○ Dicing (Process C):

The layered member in which the nine sheets U2 to U9 and UCB are stacked is cut on a chip-by-chip basis by a dicing apparatus, whereby a lot of units of optical system (optical units) in which the nine layers 20 to 90 and CB are stacked are produced. At that time, as to the actuator sheet U6, the sheet main body 6 is cut along the broken line of Fig. 12 and the chips of the actuator layer 60 are cut off, one by one, from one another, whereby a plurality of chips of the actuator layer 60 are formed.

### ○ Inspection of Deflection of Optical Axis (Process D):

As to a lot of optical units produced by the above dicing, a lens deflection measurement device checks whether the amount of deviation (i.e., deflection) of the optical axes of the three lens units 41, 51, and 81 is within a predetermined permissible value range (e.g., within 5 µm) or not.

The reason why the inspection of the deflection of the optical axes is performed will be briefly discussed herein. In general, the most expensive one out of the constituent elements of the camera module 400 is the image pickup element layer 10. The camera module 400 of which the deflection of the optical axes is out of the predetermined permissible value range is regarded as a defective product. For this reason, when screening of the optical units is performed to sort non-defective ones from defective ones and the image pickup element layers 10 are mounted only on the non-defective units, it becomes possible to reduce the manufacturing cost of the camera module 400 and a waste of resources.

### ○ Bonding of Image Pickup Element Layer (Process E):

On a lower surface of each of the optical units which are determined to be non-defective ones by the inspection of the deflection of the optical axes (specifically, on a back surface of the image pickup sensor holder layer 20), the chip of the image pickup element layer 10 is bonded with a so-called epoxy resin adhesive or ultraviolet curing adhesive, whereby the camera module 400 is completed.

Thus, in the process for manufacturing the camera module 400 in accordance with the preferred embodiment of the present invention, a plurality of sheets including the actuator sheet U6 in which a plurality of chips (which correspond to the actuator layers 60) each having the actuator portions 61a and 61b are formed in a predetermined arrangement and the parallel spring lower sheet U7 in which a plurality of chips (which correspond to the parallel spring lower layers 70) each having the object to be driven such as the elastic portion 71 and the like are formed in a predetermined arrangement are stacked and bonded to one another and then separated chip by chip, whereby a plurality of optical units and then a plurality of camera modules 400 are manufactured. Therefore, it is possible to ensure simplification of the process of assembling the camera module 400 and reduction of the manufacturing cost of the camera module 400. Then, an autofocus function can be integrated in the downsized camera module 400 with high precision. Therefore, it is possible to achieve both higher functionality and higher precision in a device including a compact drive mechanism.

Since the layers 10 to 90 and CB constituting the camera module 400 are bonded to one another with an adhesive at the outer peripheral portions thereof, the internal structure including the actuator portions 61a and 61b, the elastic portions 71 and 91, the lens unit 81, and the lens holding unit 83 is hermetically sealed. Therefore, though the drive mechanism has a very small clearance, when the camera module 400 is assembled in a clean room, for example, it is possible to prevent dust from entering a space created by the outer peripheral portions of the image pickup element unit 11, the protective layer SB, and the other layers, and the accuracy of the operation of the drive mechanism is increased by the hermetical sealing. Further, since air convection can be prevented by the hermetical sealing, it is possible to reduce the variation of the loads on the drive mechanism.

### <Variations>

The present invention is not limited to the above-discussed preferred embodiment but numerous modifications and variations can be devised without departing from the scope of the invention.

⊚ hough a voltage is applied to the actuator portions 61a and 61b by the through wire portions CTa and CTb which penetrate a plurality of layers in the above-discussed preferred embodiment, for example, this is only one exemplary case. For example, a wire may be provided to electrically connect the terminal portion provided in the outer peripheral portion of the actuator layer 60 to the actuator portions 61a and 61b. In this case, the terminal portion serves as a terminal for electrically connecting the wire which serves to give an electric field to the actuator portions 61a and 61b from the outside of the actuator layer 60. Adopting such a configuration makes it easier to form the layers to be provided between the image pickup element layer 10 and the actuator layer 60.

⊚ Though the actuator layer 60 has a configuration shown in Fig. 5 in the above-discussed preferred embodiment, this is only one exemplary configuration, and various types of configurations may be adopted. Hereinafter, specific examples (the first to third specific examples) of various types of configurations of the actuator layer will be shown and discussed.

### ○ First Specific Example:

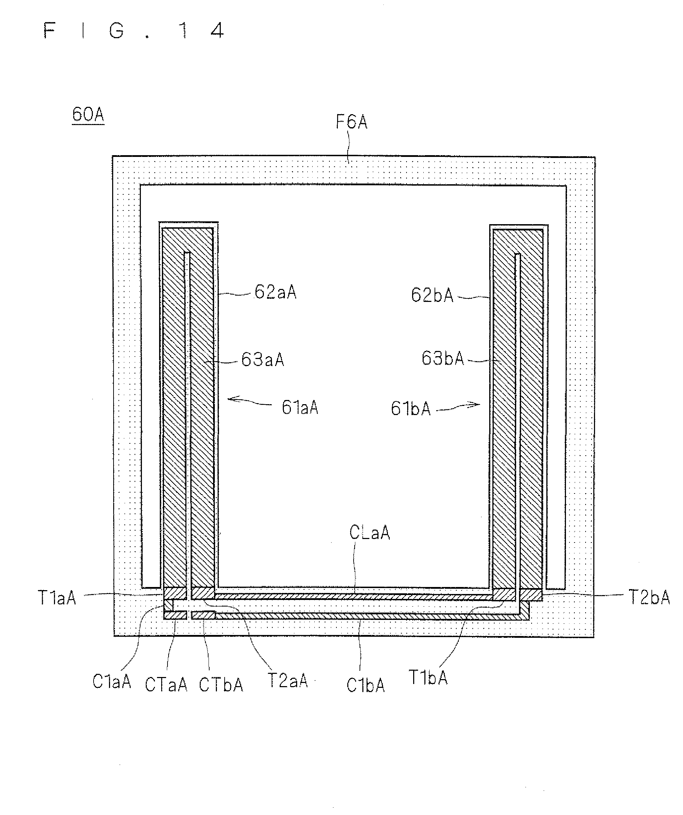

Fig. 14 is a schematic plan view showing an exemplary configuration of an actuator layer 60A in accordance with the first specific example.

As shown in Fig. 14, the actuator layer 60A mainly comprises a frame portion F6A having the same structure as that of the frame portion F6 of the above-discussed preferred embodiment and two actuator portions 61aA and 61bA which are protruded from the respective vicinities of both ends of one side of the inner edge of the frame portion F6A. In this case, the frame portion F6A has a rectangular inner edge and the two actuator portions 61aA and 61bA extend substantially in parallel to two opposed sides of the frame portion F6A. The actuator portion 61aA has a structure in which a thin film-like displacement element unit 63aA is formed on a plate-like protruding portion 62aA and the actuator portion 61bA has a structure in which a thin film-like displacement element unit 63bA is formed on a plate-like protruding portion 62bA.

Specifically, the protruding portions 62aA and 62bA are each formed of silicon or the like, and respective one ends thereof along the extending direction are fixed to the frame portion F6A, each serving as a fixed end, and respective other ends thereof each serve as a free end. The displacement element units 63aA and 63bA are each formed of a thin film-like shape memory alloy (SMA) or the like. The displacement element unit 63aA extends in a vertically long and substantially U-shaped manner, starting from the vicinity of the fixed end of the protruding portion 62aA, via the vicinity of the free end of the protruding portion 62aA, and returning to the vicinity of the fixed end of the protruding portion 62aA. The displacement element unit 63bA extends in a vertically long and substantially U-shaped manner, starting from the vicinity of the fixed end of the protruding portion 62bA, via the vicinity of the free end of the protruding portion 62bA, and returning to the vicinity of the fixed end of the protruding portion 62bA.

One of the end portions of the displacement element unit 63aA along the extending direction, which is farther from the displacement element unit 63bA, is electrically connected to an electrode portion T1aA provided on the frame portion F6A and the other end is electrically connected to an electrode portion T2aA provided on the frame portion F6A. One of the end portions of the displacement element unit 63bA along the extending direction, which is closer to the displacement element unit 63aA, is electrically connected to an electrode portion T1bA provided on the frame portion F6A and the other end is electrically connected to an electrode portion T2bA provided on the frame portion F6A. The electrode portion T1aA is electrically connected to a through wire portion CTaA through a wire portion C1aA, the electrode portion T2aA and the electrode portion T1bA are electrically connected to each other with a wire portion CLaA provided on the frame portion F6A, and the electrode portion T2bA is electrically connected to a through wire portion CTbA through a wire portion C1bA.

Thus, the through wire portion CTaA, the wire portion C1aA, the electrode portion T1aA, the displacement element unit 63aA, the electrode portion T2aA, the wire portion CLaA, the electrode portion T1bA, the displacement element unit 63bA, the electrode portion T2bA, the wire portion C1bA, and the through wire portion CTbA are electrically connected in series to one another in this order. In this case, the two through wire portions CTaA and CTbA penetrate the frame portion F6A and also penetrate the other stacked layers (e.g., the layers 10 to 50). The through wire portion CTaA, the wire portion C1aA, the electrode portion T1aA, the electrode portion T2aA, the wire portion CLaA, the electrode portion T1bA, the electrode portion T2bA, the wire portion C1bA, and the through wire portion CTbA are formed of e.g., a conductive material such as gold and can be formed by any one of plating, evaporation, sputtering, and thin-film bonding.

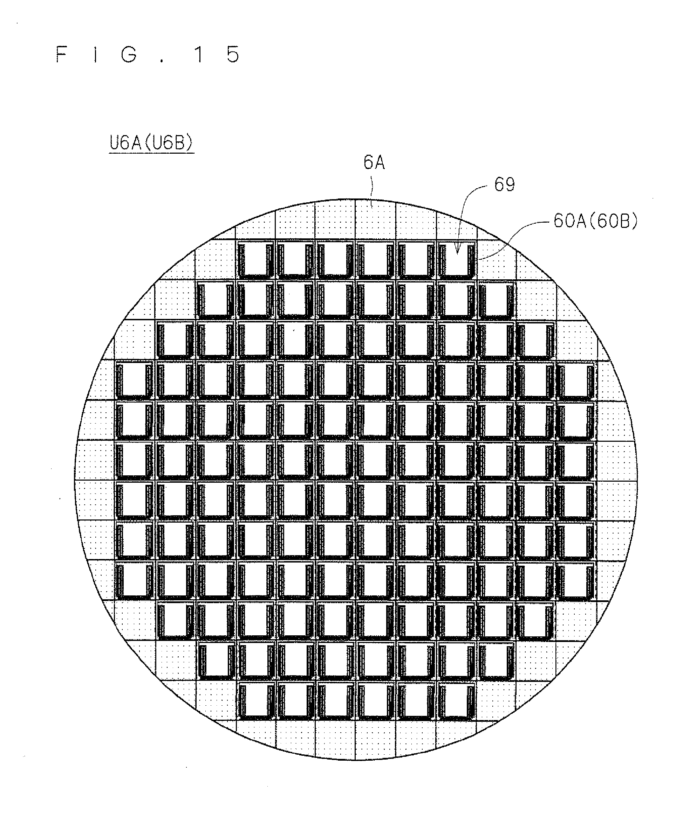

Fig. 15 is a view illustrating a sheet (actuator sheet) U6A in which a lot of chips each of which corresponds to the actuator layer 60A shown in Fig. 14 are formed in a predetermined arrangement (herein, in a matrix) and an integrated manner. As shown in Figs. 14 and 15, the actuator sheet U6A comprises a plate-like sheet main body 6A in which a plurality of opening portions 69 each penetrating from a front surface to a back surface thereof are formed in a predetermined arrangement and the actuator portions 61aA and 61bA which are protruded from the sheet main body 6A in each of the opening portions 69. As shown in Fig. 14, at a predetermined position in the vicinity of each of the opening portions 69 in the sheet main body 6A, the through wire portions CTaA and CTbA which penetrate the frame portion F6A are so provided as to give an electric field to the displacement element units 63aA and 63bA.

Though a voltage is applied to the actuator portions 61aA and 61bA by the two through wire portions CTaA and CTbA in the actuator layer 60A shown in Fig. 15, this is only one exemplary case. There may be a configuration, for example, where a plurality of terminal portions are provided at an outer edge portion of the actuator layer and the plurality of terminal portions are electrically connected to the actuator portions 61A and 61bA, respectively, to thereby apply a voltage to the actuator portions 61aA and 61bA.

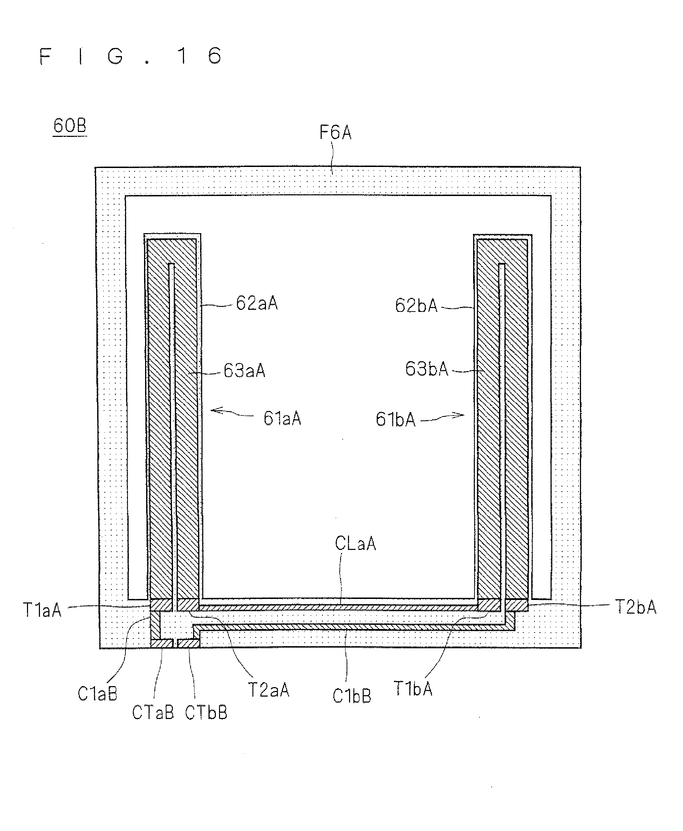

Fig. 16 is a view showing an exemplary configuration of an actuator layer 60B provided with a plurality of terminal portions CTaB and CTbB at an outer edge portion thereof.

The actuator layer 60B of Fig. 16 is different from the actuator layer 60A of Fig. 15 in that the two through wire portions CTaA and CTbA are replaced by the two terminal portions CTaB and CTbB, respectively, and the two wire portions Clay and C1bA are replaced by a wire portion C1aB for electrically connecting the electrode portion T1aA and the terminal portion CTaB and a wire portion C1bB for electrically connecting the electrode portion T2aA and the terminal portion CTbB, respectively. The constituent elements other than the above are identical to those in the actuator layer 60A and represented by the same reference signs. The two terminal portions CTaB and CTbB can be formed of e.g., a conductive material such as gold in the vicinity of the outer edge of the upper surface of the frame portion F6A by any one of plating, evaporation, sputtering, and thin-film bonding.

In this case, the terminal portions CTaB and CTbB serve as terminals for electrically connecting wires which serve to give an electric field to the actuator portions 61aA and 61bA from the outside of the actuator layer 60B. Adopting such a configuration makes it easier to form the layers to be provided between the image pickup element layer 10 and the actuator layer 60B.

An actuator sheet U6B in which a lot of chips each of which corresponds to the actuator layer 60B shown in Fig. 16 are formed in a predetermined arrangement and an integrated manner is such as shown in Fig. 15. In the actuator sheet U6B, the two terminal portions CTaB and CTbB are provided at predetermined positions, respectively, in a plate-like portion formed between the adjacent opening portions 69 on the sheet main body 6A. The predetermined positions herein refer to regions including lines to be cut by dicing.

Though the number of the through wire portions CTaA and CTbA and the terminal portions CTaB and CTbB is reduced by electrically connecting the two displacement element units 63aA and 63bA with the wire portion CLaA in the actuator layers 60A and 60B shown in Figs. 14 and 16, respectively, this is only one exemplary case. For example, a through wire portion and a terminal portion may be provided for each of the displacement element units 63aA and 63bA. There may be another configuration where a through electrode is electrically connected to one of the displacement element units 63aA and 63bA and a terminal portion is electrically connected to the other one.

### ○ Second Specific Example:

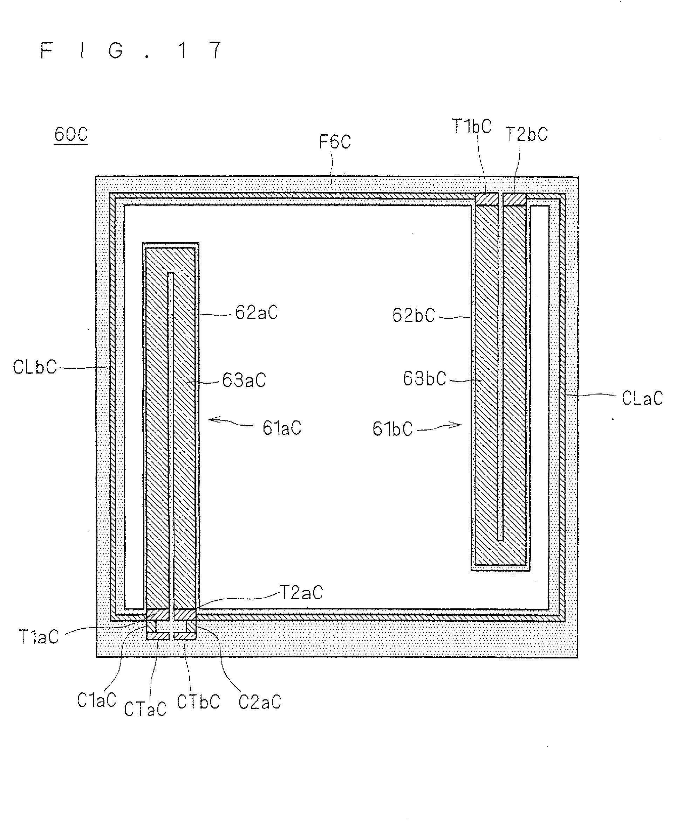

Fig. 17 is a schematic plan view showing an exemplary configuration of an actuator layer 60C in accordance with the second specific example.

As shown in Fig. 17, the actuator layer 60C mainly comprises a frame portion F6C having the same structure as that of the frame portion F6 of the above-discussed preferred embodiment and two actuator portions 61aC and 61bC which are protruded from the vicinities of respective ends of two opposed sides of the four-side inner edge of the frame portion F6C. In this case, the frame portion F6C has a rectangular inner edge and the two actuator portions 61aC and 61bC are fixed to the respective vicinities of two corner portions on one diagonal line in the rectangular inner edge and extend substantially in parallel to the other two opposed sides of the rectangular inner edge of the frame portion F6C. The actuator portion 61aC has a structure in which a thin film-like displacement element unit 63aC is formed on a plate-like protruding portion 62aC and the actuator portion 61bC has a structure in which a thin film-like displacement element unit 63bC is formed on a plate-like protruding portion 62bC.

Specifically, the protruding portions 62aC and 62bC are each formed of silicon or the like, and respective one ends thereof along the extending direction are fixed to the frame portion F6C, each serving as a fixed end, and respective other ends thereof each serve as a free end. The displacement element units 63aC and 63bC are each formed of a thin film-like shape memory alloy (SMA) or the like. The displacement element unit 63aC extends in a vertically long and substantially U-shaped manner, starting from the vicinity of the fixed end of the protruding portion 62aC, via the vicinity of the free end of the protruding portion 62aC, and returning to the vicinity of the fixed end of the protruding portion 62aC. The displacement element unit 63bC extends in a vertically long and substantially U-shaped manner, starting from the vicinity of the fixed end of the protruding portion 62bC, via the vicinity of the free end of the protruding portion 62bC, and returning to the vicinity of the fixed end of the protruding portion 62bC.

One of the end portions of the displacement element unit 63aC along the extending direction, which is farther from the displacement element unit 63bC, is electrically connected to an electrode portion T1aC provided on the frame portion F6C and the other end is electrically connected to an electrode portion T2aC provided on the frame portion F6C. One of the end portions of the displacement element unit 63bC along the extending direction, which is closer to the displacement element unit 63aC, is electrically connected to an electrode portion T1bC provided on the frame portion F6C and the other end is electrically connected to an electrode portion T2bC provided on the frame portion F6C. The electrode portion T1aC is electrically connected to a through wire portion CTaC through a wire portion C1aC, and the electrode portion T2aC is electrically connected to a through wire portion CTbC through a wire portion C2aC. Further, the electrode portion T2aC and the electrode portion T2bC are electrically connected to each other with a wire portion CLaC provided on the frame portion F6C and the electrode portion T1aC and the electrode portion T1bC are electrically connected to each other with a wire portion CLbC provided on the frame portion F6C. With these connections, the two displacement element units 61aC and 61bC are electrically connected in parallel between the two through wire portions CTaC and CTbC.

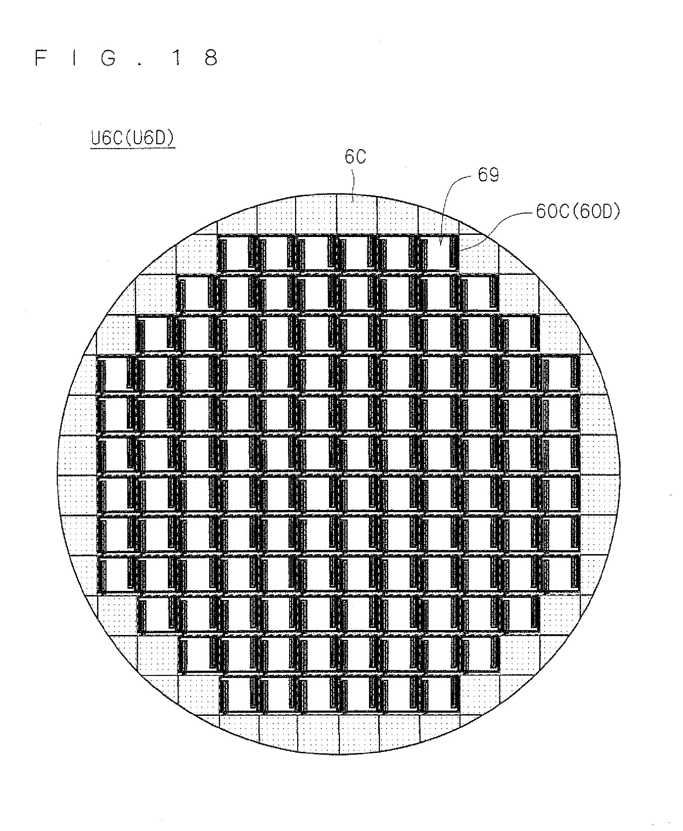

Fig. 18 is a view illustrating a sheet (actuator sheet) U6C in which a lot of chips each of which corresponds to the actuator layer 60C shown in Fig. 17 are formed in a predetermined arrangement (herein, in a matrix) and an integrated manner. As shown in Figs. 17 and 18, the actuator sheet U6C comprises a plate-like sheet main body 6C in which a plurality of opening portions 69 each penetrating from a front surface to a back surface thereof are formed in a predetermined arrangement and the actuator portions 61aC and 61bC which are protruded from the sheet main body 6C in each of the opening portions 69. As shown in Fig. 17, at predetermined positions in the vicinity of each of the opening portions 69 in the sheet main body 6C, the through wire portions CTaC and CTbC which penetrate the frame portion F6C are so provided as to give an electric field to the displacement element units 63aC and 63bC.

Though a voltage is applied to the actuator portions 61aC and 61bC by the two through wire portions CTaC and CTbC in the actuator layer 60C shown in Fig. 18, this is only one exemplary case. There may be a configuration, for example, where a plurality of terminal portions are provided at an outer edge portion of the actuator layer and the plurality of terminal portions are electrically connected to the actuator portions 61aC and 61bC, respectively, to thereby apply a voltage to the actuator portions 61aC and 61bC.

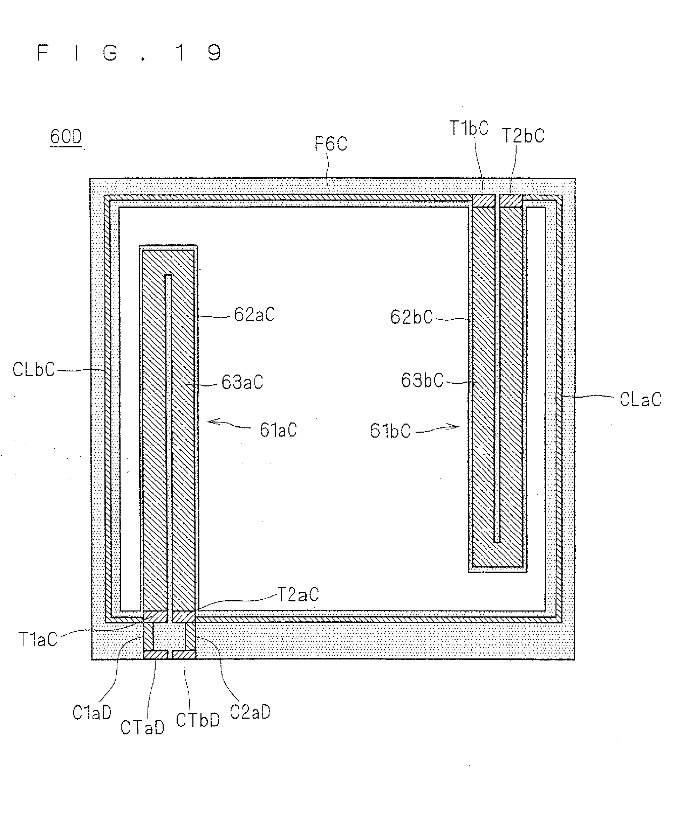

Fig. 19 is a view showing an exemplary configuration of an actuator layer 60D provided with a plurality of terminal portions CTaD and CTbD at an outer edge portion thereof.

The actuator layer 60D of Fig. 19 is different from the actuator layer 60C of Fig. 17 in that the two through wire portions CTaC and CTbC are replaced by the two terminal portions CTaD and CTbD, respectively, and the two wire portions C1aC and C2aC are replaced by a wire portion C1aD for electrically connecting the electrode portion T1aC and the terminal portion CTaD and a wire portion C2aD for electrically connecting the electrode portion T2aC and the terminal portion CTbD, respectively. The constituent elements other than the above are identical to those in the actuator layer 60C and represented by the same reference signs.

In this case, the terminal portions CTaD and CTbD serve as terminals for electrically connecting wires which serve to give an electric field to the actuator portions 61aC and 61bC from the outside of the actuator layer 60D. Adopting such a configuration makes it easier to form the layers to be provided between the image pickup element layer 10 and the actuator layer 60D.

An actuator sheet U6D in which a lot of chips each of which corresponds to the actuator layer 60D shown in Fig. 19 are formed in a predetermined arrangement and an integrated manner is such as shown in Fig. 18. In the actuator sheet U6D, the two terminal portions CTaD and CTbD are provided at predetermined positions, respectively, in a plate-like portion formed between the adjacent opening portions 69 on the sheet main body 6C. The predetermined positions herein refer to regions including lines to be cut by dicing.

Though the number of the through wire portions CTaC and CTbC and the terminal portions CTaD and CTbD is reduced by electrically connecting the two displacement element units 63aC and 63bC with the wire portions CLaC and CLbC in the actuator layers 60C and 60D shown in Figs. 17 and 19, respectively, this is only one exemplary case. For example, a through wire portion and a terminal portion may be provided for each of the displacement element units 63aC and 63bC. There may be another configuration where a through electrode is electrically connected to one of the displacement element units 63aC and 63bC and a terminal portion is electrically connected to the other one.

### ○ Third Specific Example:

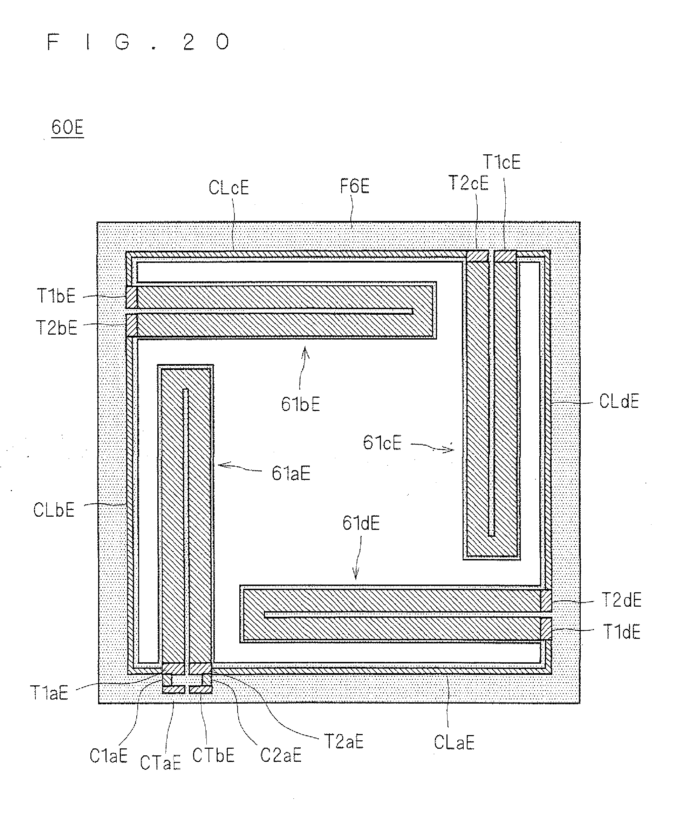

Fig. 20 is a schematic plan view showing an exemplary configuration of an actuator layer 60E in accordance with the third specific example.

As shown in Fig. 20, the actuator layer 60E mainly comprises a frame portion F6E having the same structure as that of the frame portion F6 of the above-discussed preferred embodiment and four actuator portions 61aE, 61bE, 61cE, and 61dE which are protruded from the vicinity of one end of each of the four sides of the inner edge of the frame portion F6E. In this case, the frame portion F6E has a rectangular inner edge and the four actuator portions 61aE, 61bE, 61cE, and 61dE each extend substantially in parallel to one of the sides of the rectangular inner edge of the frame portion F6E. The four actuator portions 61aE, 61bE, 61cE, and 61dE have the same structure as that of the actuator portions 61aC and 61bC in the second specific example. In the case having such a configuration, however, for example, the configurations of the parallel spring lower layer 70 and the parallel spring upper layer 90 need to conform the arrangement of the actuator portions 61aE, 61bE, 61cE, and 61dE.

One of the end portions of the displacement element unit provided on the actuator portion 61aE along the extending direction, which is farther from the actuator portion 61dE, is electrically connected to an electrode portion T1aE provided on the frame portion F6E and the other end is electrically connected to an electrode portion T2aE provided on the frame portion F6E. One of the end portions of the displacement element unit provided on the actuator portion 61bE along the extending direction, which is farther from the actuator portion 61aE, is electrically connected to an electrode portion T1bE provided on the frame portion F6E and the other end is electrically connected to an electrode portion T2bE provided on the frame portion F6E. One of the end portions of the displacement element unit provided on the actuator portion 61cE along the extending direction, which is farther from the actuator portion 61bE, is electrically connected to an electrode portion T1cE provided on the frame portion F6E and the other end is electrically connected to an electrode portion T2cE provided on the frame portion F6E. One of the end portions of the displacement element unit provided on the actuator portion 61dE along the extending direction, which is farther from the actuator portion 61cE, is electrically connected to an electrode portion T1dE provided on the frame portion F6E and the other end is electrically connected to an electrode portion T2dE provided on the frame portion F6E.

The electrode portion T1aE is electrically connected to a through wire portion CTaE through a wire portion C1aE, and the electrode portion T2aE is electrically connected to a through wire portion CTbE through a wire portion C2aE. Further, the electrode portion T2aE and the electrode portion T1dE are electrically connected to each other with a wire portion CLaE provided on the frame portion F6E, the electrode portion T2bE and the electrode portion T1aE are electrically connected to each other with a wire portion CLbE provided on the frame portion F6E, the electrode portion T2cE and the electrode portion T1bE are electrically connected to each other with a wire portion CLcE provided on the frame portion F6E, and the electrode portion T2dE and the electrode portion T1cE are electrically connected to each other with a wire portion CLdE provided on the frame portion F6E.

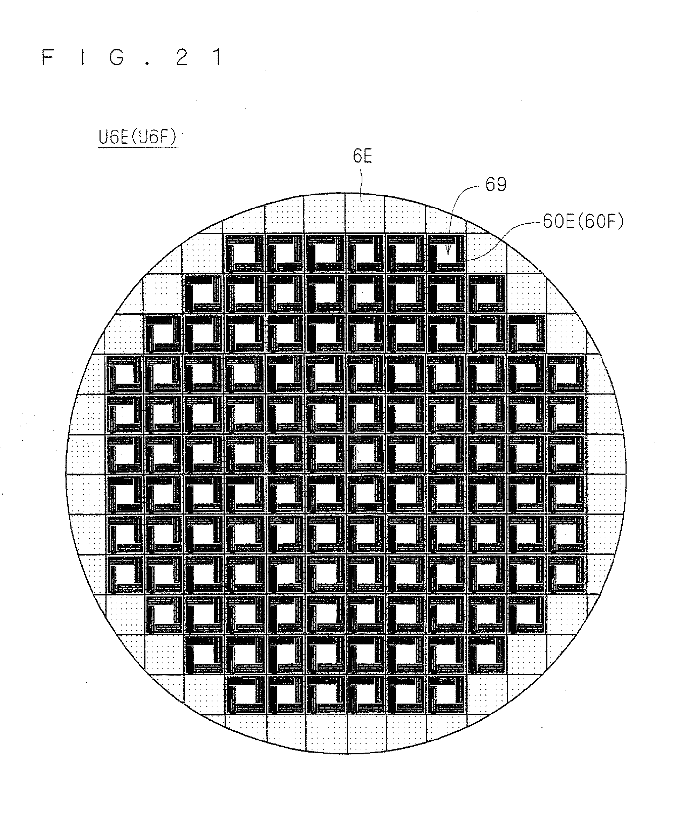

Fig. 21 is a view illustrating a sheet (actuator sheet) U6E in which a lot of chips each of which corresponds to the actuator layer 60E shown in Fig. 20 are formed in a predetermined arrangement (herein, in a matrix) and an integrated manner. As shown in Figs. 20 and 21, the actuator sheet U6E comprises a plate-like sheet main body 6E in which a plurality of opening portions 69 each penetrating from a front surface to a back surface thereof are formed in a predetermined arrangement and the actuator portions 61aE, 61bE, 61cE, and 61dE which are protruded from the sheet main body 6E in each of the opening portions 69. As shown in Fig. 20, at predetermined positions in the vicinity of each of the opening portions 69 in the sheet main body 6E, the through wire portions CTaE and CTbE which penetrate the frame portion F6E are so provided as to give an electric field to the respective displacement element units of the actuator portions 61aE, 61bE, 61cE, and 61dE.

Though a voltage is applied to the actuator portions 61aE, 61bE, 61cE, and 61dE by the two through wire portions CTaE and CTbE in the actuator layer 60E shown in Fig. 21, this is only one exemplary case. There may be a configuration, for example, where a plurality of terminal portions are provided at an outer edge portion of the actuator layer and the plurality of terminal portions are electrically connected to the actuator portions 61aE, 61bE, 61cE, and 61dE, respectively, to thereby apply a voltage to the actuator portions 61aE, 61bE, 61cE, and 61dE.

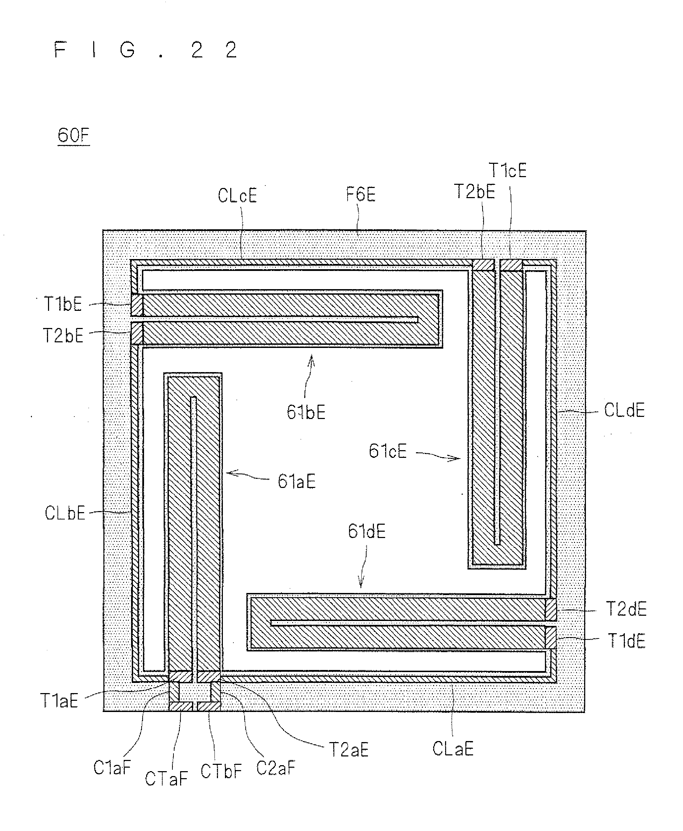

Fig. 22 is a view showing an exemplary configuration of an actuator layer 60F provided with a plurality of terminal portions CTaF and CTbF at an outer edge portion thereof.

The actuator layer 60F of Fig. 22 is different from the actuator layer 60E of Fig. 20 in that the two through wire portions CTaE and CTbE are replaced by the two terminal portions CTaF and CTbF, respectively, and the two wire portions C1aE and C2aE are replaced by a wire portion C1aF for electrically connecting the electrode portion T1aE and the terminal portion CTaF and a wire portion C2aF for electrically connecting the electrode portion T2aE and the terminal portion CTbF, respectively. The constituent elements other than the above are identical to those in the actuator layer 60E and represented by the same reference signs.

In this case, the terminal portions CTaE and CTbF serve as terminals for electrically connecting wires which serve to give an electric field to the actuator portions 61aE, 61bE, 61cE, and 61dE from the outside of the actuator layer 60F. Adopting such a configuration makes it easier to form the layers to be provided between the image pickup element layer 10 and the actuator layer 60F.

An actuator sheet U6F in which a lot of chips each of which corresponds to the actuator layer 60F shown in Fig. 22 are formed in a predetermined arrangement and an integrated manner is such as shown in Fig. 21. In the actuator sheet U6F, the two terminal portions CTaF and CTbF are provided at predetermined positions, respectively, in a plate-like portion formed between the adjacent opening portions 69 on the sheet main body 6E. The predetermined positions herein refer to regions including lines to be cut by dicing.

Though the number of the through wire portions CTaE and CTbE and the terminal portions CTaF and CTbF is reduced by electrically connecting the four displacement element units with the wire portions CLaE, CLbE, CLcE, and CLdE in the actuator layers 60E and 60F shown in Figs. 20 and 22, respectively, this is only one exemplary case. For example, a through wire portion and a terminal portion may be provided for each of the displacement element units. There may be another configuration where a through electrode is electrically connected to some of the displacement element units and a terminal portion is electrically connected to the other ones.

⊚ Though a plurality of actuator portions 61a and 61b extend from the sheet main body 6 in each opening portion 69 in the above-discussed preferred embodiment, this is only one exemplary configuration. As another example, only one actuator portion may be protruded from the sheet main body 6 in each opening portion 69. In other words, at least one actuator portion has only to be protruded from the sheet main body 6.

⊚ Though the actuator portion 61a is formed in such a manner where the protruding portion 612a, the displacement element units 613a and 615a, the insulating film 614a, and the conductive portion Cna are stacked on the protruding portion 611a and the actuator portion 61b is formed in such a manner where the protruding portion 612b, the displacement element units 613b and 615b, the insulating film 614b, and the conductive portion Cnb are stacked on the protruding portion 611b in the actuator layer 60 in the above-discussed preferred embodiment, this is only one exemplary formation of the actuator portions 61a and 61b. For example, a plurality of layered structures each of which consists of the protruding portion b12a, the displacement element units 613a and 615a, the insulating film 614a, and the conductive portion Cna which are layered are stacked on the protruding portion 611a and a plurality of layered structures each of which consists the protruding portion 612b, the displacement element units 613b and 615b, the insulating film 614b, and the conductive portion Cnb which are layered are stacked on the protruding portion 611b, whereby an output caused by the deformation of the actuator portions 61a and 61b can be increased.

Further, for example, the layered structure consisting of the protruding portion 612a, the displacement element units 613a and 615a, the insulating film 614a, and the conductive portion Cna which are layered is provided on each of the upper and lower surfaces of the protruding portion 611a and the layered structure consisting of the protruding portion 612b, the displacement element units 613b and 615b, the insulating film 614b, and the conductive portion Cnb which are layered is provided on each of the upper and lower surfaces of the protruding portion 611b, whereby the respective free ends of the actuator portions 61a and 61b becomes vertically movable.

⊚ Though the camera module 400 is formed by stacking the ten layers in the above-discussed preferred embodiment, this is only one exemplary configuration. There may be a configuration, for example, where the lens unit 81 having a lens power and the frame portion F8 are connected to each other with thin plate-like elastic members each formed of the same material as that of the lens unit 81 at least two portions in the periphery of the lens unit 81 in the third lens layer 80, and the parallel spring lower layer 70 and the parallel spring upper layer 90 are thereby omitted.

In order to suppress the deviation of the optical axis of the lens unit 81, however, it is preferable that the configuration of the third lens layer 80 should be changed to a configuration in which the frame portion F8 and the lens unit 81 are connected to each other with at least three elastic members in the periphery of the lens unit 81 from different directions. Further, it is desirable that at least three elastic members should be provided at substantially regular intervals along the circumferential direction with the optical axis of the lens unit 81 as the center.

Thus, when the lens unit 81 is supported by three or more elastic members arranged in the periphery of the lens unit 81, it is possible to combine the lens unit 81 and the actuator portions 61a and 61b with high accuracy without any deviation of the optical axis of the lens unit 81 to manufacture the camera module 400. Since the parallel spring lower layer 70 and the parallel spring upper layer 90 having the elastic portions 71 and 91 for holding the lens unit 81 are not needed, for example, it is possible to ensure an increase of assembly precision caused by the simplification of the structure of the camera module 400 and the thinning and downsizing of the camera module 400.

Further, it is also possible to omit the first and second lens layers 40 and 50 as appropriate, depending on the design of the optical system. From a point of view of the structure for supporting the lens unit 81 by the actuator portions 61a and 61b with high accuracy, the camera module 400 has only to be formed of a plurality of layers including at least the lens layer 80 having the lens unit 81 to be moved and the actuator layer 60 for moving the lens unit 81.

With the above-discussed structure in which the parallel spring lower layer 70 and the parallel spring upper layer 90 are omitted, it is possible to assemble the camera module with high precision while suppressing the deflection of the optical axis of the lens unit 81 since cutting of the connecting portions 84 with a laser is not needed, as compared with the above-discussed preferred embodiment.

⊚ Though the deflection of the optical axis of the optical unit is checked after the dicing and the image pickup element layer 10 is mounted on the non-defective optical unit in the above-discussed preferred embodiment, this is only one exemplary case. In a case where the accuracy of stacking the nine sheets U2 to U9 and UCB is high, there may be a process, for example, where a sheet (image pickup element sheet) in which a lot of image pickup element layers 10 shown in Fig. 3(a) are formed on a predetermined substrate (e.g., a silicon substrate) in a predetermined arrangement (herein, in a matrix) is formed and the image pickup element sheet is also stacked and bonded when the nine sheets U2 to U9 and UCB are stacked, and then the dicing is performed, to thereby complete a lot of camera modules 400. Since adopting such a structure allows easier alignment also in the bonding of the image pickup element layer 10, it is possible to easily combine the members which implement a plurality of functions including the image pickup element unit 11 with high accuracy.

⊚ Though the wires are formed by metal-plating in the through hole constituted of the through holes Ca2 to Ca5 which are connected in an integrated manner and the through hole constituted of the through holes Cb2 to Cb5 which are connected in an integrated manner in the state where the four sheets U2 to U5 are stacked in the above-discussed preferred embodiment, this is only one exemplary case. In the case where the image pickup element sheet is stacked and bonded before the dicing, for example, after the plurality of sheets U2 to U9 and UCB are stacked and bonded, metal-plating is performed in a through hole constituted of the through holes Ca1 to Ca5, Ca61, and Ca62 which are connected in an integrated manner and a through hole constituted of the through holes Cb1 to Cb5, Cb61, and Cb62 which are connected in an integrated manner, whereby the through wire portions Cta and Ctb can be formed.

Further, in the five sheets U2 to U6, metal-plating or the like is performed in the through holes Ca2 to Ca5, Ca61, Ca62, Cb2 to Cb5, Cb61, and Cb62 to be filled with the conductive material on a sheet-by-sheet basis, whereby the through wire portions Cta and Ctb can be formed at the point of time when the five sheets U2 to U6 are stacked. In order to reduce the contact resistance between the adjacent layers, however, it is preferable that the through holes Ca2 to Ca5, Ca61, Ca62, Cb2 to Cb5, Cb61, and Cb62 should be filled with the conductive material so that the conductive material may slightly extend off. Thus, if the wires penetrating the frame portions F61 and F62 are formed in the actuator layer 60 in advance, when a device including a compact drive mechanism is manufactured, it is possible to easily form the through wire portions Cta and Ctb for giving an electric field to the actuator portions 61a and 61b with high accuracy by providing like penetrating wires in the other sheets (herein, the second lens sheet U5 and the like) on which the actuator sheet U6 is stacked and bonded.

⊚ Though the through wire portions Cta and Ctb for supplying electric power which penetrate the five layers out of the ten layers constituting the camera module 400 are provided in the above-discussed preferred embodiment, the through wire portions are not always needed. As to the image pickup element layer 10, for example, there may be a configuration where no wire penetrating therethrough is provided and wires for supplying a voltage are provided in the image pickup element layer 10 as appropriate, like various wires for signals which are provided in the image pickup element layer 10, and terminal portions to be electrically connected to the wires from a back surface or a side surface of the image pickup element layer 10 are formed. Adopting such a configuration also makes it possible to easily form wire portions for giving an electric field to the actuator portions with high accuracy, like the above-discussed preferred embodiment. Further, this configuration allows easier formation of the actuator sheet U6.

As discussed above, depending on the design of the optical system, the first and second lens layers 40 and 50 may be omitted. Therefore, from a point of view of the structure for easily forming the wire portions for giving an electric field to the actuator portions 61a and 61b with high accuracy, wires which penetrate at least one layer between the image pickup element layer 10 and the actuator layer 60, out of the plurality of layers constituting the camera module 400, and give an electric field to the actuator layer 60 have only to be provided.

⊚ Though the through holes Ca61 and Cb61 are provided in the base layer 601 and the through holes are filled with the conductive material in the above-discussed preferred embodiment, this is only one example, and as another example, ion doping is performed on the silicon thin plate which is a material of the base layer 601, to thereby form a conductive region.

⊚ Though the through holes Ca2 to Ca5 and Cb2 to Cb5 which penetrate the plurality of sheets U2 to U5 are formed on a sheet-by-sheet basis in the above-discussed preferred embodiment, this is only one exemplary case. As another example, after stacking and bonding the sheets U2 to U5, through holes which have a size of about 10 µm and penetrate four sheets may be formed by using so-called femtosecond laser, excimer laser, ion etching, or the like.

⊚ Though a shape memory alloy (SMA) is used as the actuator element (displacement element) in the above-discussed preferred embodiment, this is only one example, and as another example, a piezoelectric element including an inorganic piezoelectric body such as PZT (Pb (lead) zirconate titanate), an organic piezoelectric body such as PVDF (polyvinylidene fluoride), or the like may be used. In a case where a thin film of piezoelectric element is used as the actuator element, for example, an electrode, the thin film of piezoelectric element, and an electrode are formed in this order on the base layer 601 by sputtering or the like and polling is performed with high electric field.

⊚ Though the thin film of actuator element is formed on the base layer 601 with the insulating layer 602 and the insulating films 614a and 614b interposed therebetween to thereby form the actuator portions 61a and 61b in the above-discussed preferred embodiment, this is only one exemplary case. For example, a metal thin film having the ratio (the coefficient of linear expansion) of the change in the length in response to the rise of the temperature which is different from that of the material of the base layer 601 is formed on the base layer 601, to thereby form the actuator portions. As possible combination of materials having different coefficients of linear expansion, for example, the base layer is formed of silicon (Si) and the metal thin film is formed of aluminum (Al).

Specifically, the actuator portion may be formed by stacking a thin film of titanium (Ti) or the like and a thin film of platinum (Pt) in this order on the base layer which is a silicon substrate to form a heater and then forming a metal layer such as aluminum (Al), nickel (Ni), or the like on the heater. In such a structure, in a state (OFF state) where no electric power is applied to the heater, since the metal layer is in a room temperature state, the metal layer becomes flat by the elastic force of the silicon substrate and the actuator portion have an almost flat shape. On the other hand, in a state (ON state) where electric power is applied to the heater, a current flows in the heater and the heater is heated by the Joule heat thereof. The metal layer is also heated by the heat generated at that time and expands, and there arises a difference between the length of the metal layer and that of the silicon substrate and this causes a warp of the actuator portion.

⊚ Though the elastic portions 71 and 91 are fixed at two portions of the frame portions F7 and F9, respectively, in the above-discussed preferred embodiment, various structures may be used, not limited to this type. In order to move the lens unit 81 without inclining the optical axis of the lens unit 81 as discussed above, however, it is preferable that the elastic portions 71 and 91 should be fixed to at least two portions of the frame portions F7 and F9, respectively.

⊚ Though both ends of the elastic portion 71 are fixed to two portions of the frame portion F7 in total and both ends of the elastic portion 91 are fixed to two portions of the frame portion F9 in total in the above-discussed preferred embodiment, this is only one exemplary structure. There may be a structure, for example, where each of the elastic portions 71 and 91 is divided into two at the center portion, and respective one ends of one and the other halves of the elastic portion 71 are fixed to the frame portion F7 at two portions in total and respective one ends of one and the other halves of the elastic portion 91 are fixed to the frame portion F9 at two portions in total.

⊚ Though the object to be moved by the actuator portions 61a and 61b is the optical lens which is a constituent element of an autofocus device in the above-discussed preferred embodiment, the object to be moved is not limited to this. For example, the object to be moved may be an optical lens which is a constituent element of a shake correction mechanism, an optical lens which is a constituent element of an optical pickup device, or any other optical lens, or may be any one of various small-sized objects to be moved, other than the optical lens. In other words, the present invention can be generally applied to a drive device which moves an object. As the shake correction mechanism, for example, a structure for two-dimensionally driving, i.e., vertically and horizontally driving an optical lens which is an object to be moved by movement of the actuator portions may be used.

Hereinafter, a specific example including a drive mechanism to which the present invention is applied will be briefly discussed.

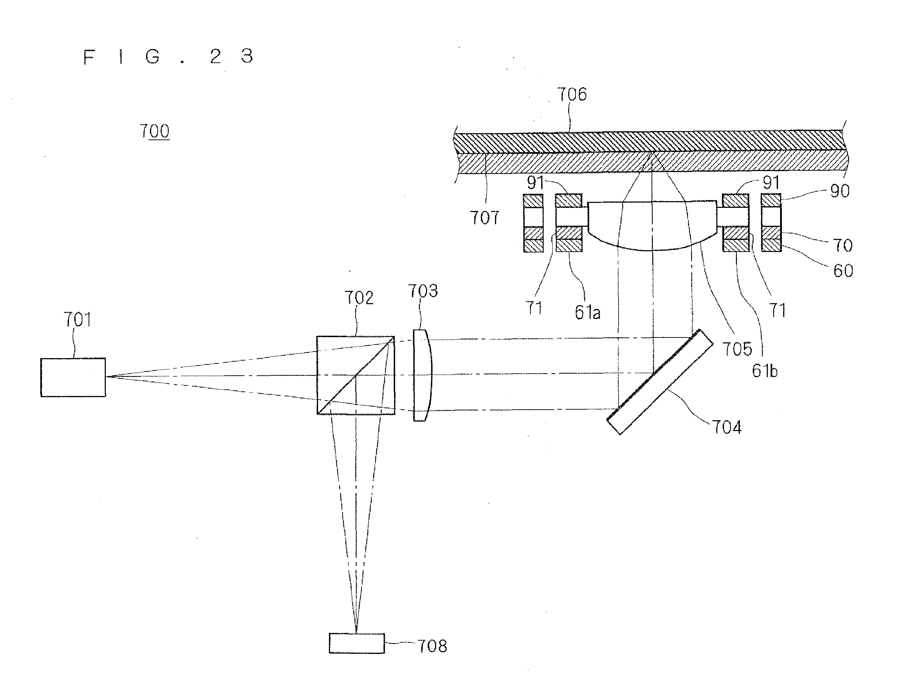

Fig. 23 is a schematic cross section showing an exemplary configuration of an optical pickup device 700 including a drive device for driving an objective lens 505.

In the optical pickup device 700, light beams emitted from a light source 701 are condensed on an information recording surface 707 of an optical disk 706 and the light beams reflected on the information recording surface 707 are received by a light receiving element 708, whereby information can be read. In the optical pickup device 700, in accordance with the shape of the information recording surface 707, it is necessary to adjust a focus position of the light beam. For this reason, the optical pickup device 700 is equipped with a drive device which drives an objective lens 705 by using the actuator layer 60, the parallel spring lower layer 70, and the parallel spring upper layer 90 of the above-discussed preferred embodiment, to thereby adjust the focus of the light beam.

As shown in Fig. 23, the light beams emitted from the light source 701 pass through a beam splitter 702 and are changed into substantially parallel light beams between a collimator lens 703. Further, the light beams are reflected on a reflecting prism 704 and enter the objective lens 705. A portion for holding the objective lens 705 is held by the elastic portion 71 of the parallel spring lower layer 70 and the elastic portion 91 of the parallel spring upper layer 90 and the actuator portions 61a and 61b of the actuator layer 60 abut on a lower surface of the elastic portion 71. With the deformation of the actuator portions 61a and 61b, the elastic portion 71 is pushed upward and downward pushing is caused by the elastic force of the elastic portion 71, whereby the objective lens 705 can be driven vertically along the optical axis. The light refracted by the objective lens 705 enters the optical disk 706 and is condensed on the information recording surface 707. The light reflected on the information recording surface 707 goes back along the optical path through which the light enters and is reflected by the beam splitter 702, going to the light receiving element 708.

### Description of Reference Numerals

- 6, 6A, 6C, 6E: sheet main body
- 50: second lens layer
- 60,60A, 60B, 60C: actuator layer
- 69: opening portion
- 61a, 61aA, 61aC, 61aE, 61b,:
- 61bA, 61bC, 61bE, 61cE, 61dE: actuator portion
- 62aA, 62bA, 62aC, 62bC,:
- 611a, 611b, 612a, 612b: protruding portion
- 63aA, 63bA, 63aC, 63bC,:
- 613a, 613b, 615a, 615b: displacement element unit
- 70: parallel spring lower layer
- 71, 91: elastic portion
- 100: cellular phone
- 400: camera module
- 615c, C1aA, C1aB, C1aC, C1aD, C1aE, C1aF,:
- C1bA, C1bB, C2aC, C2aD, C2aE, C2aF, CLaA,:
- CLaC, CLbC, CLaE, CLbE, CLcE, CLdE: wire portion
- 700: optical pickup device
- CTa, CTb, CTaA, CTbA, CTaC, CTbC, CTaE, CTbE: through wire portion
- CTaB, CTbB, CTaD, CTbD, CTaF, CTbF: terminal portion
- F1: outer peripheral portion
- F4 to F9, F6A, F6C, F6E: frame portion
- U5: second lens sheet
- U6, U6A, U6B, U6C, U6D, U6E, U6F: actuator sheet
- U7: parallel spring lower sheet

## Claims

1. An actuator array sheet comprising:
a plate-like sheet main body in which a plurality of opening portions penetrating from a front surface to a back surface of said sheet main body are formed in a predetermined arrangement; and
a movable unit protruded from said sheet main body in each of said opening portions, having a displacement element and a support unit for supporting said displacement element.

2. The actuator array sheet according to claim 1, wherein
said movable unit includes a portion to be abutted on an object to be moved.

3. The actuator array sheet according to claim 1, wherein
said movable unit includes a first movable unit and a second movable unit both of which are protruded from said sheet main body in each of said opening portions.

4. The actuator array sheet according to claim 3, wherein
said first and second movable units are protruded from opposed inner edge portions of each of said opening portions, respectively.

5. The actuator array sheet according to claim 3, further comprising
a connecting wire portion provided on said sheet main body, for electrically connecting said displacement element included in said first movable unit and said displacement element of said second movable unit.

6. The actuator array sheet according to claim 1, wherein
said sheet main body includes a portion to be bonded to a sheet in which predetermined members are formed in said predetermined arrangement.

7. The actuator array sheet according to claim 1, further comprising
a through wire portion provided in the vicinity of each of said opening portions, penetrating said sheet main body, for giving an electric field to each of said displacement elements.

8. The actuator away sheet according to claim 1. further comprising
a terminal portion provided at a predetermined portion between adjacent ones of said opening portions on said sheet main body, which is electrically connected to each of said displacement elements and for connecting a wire used for giving an electric field to said each displacement element.

9. The actuator array sheet according to claim 1, wherein
a plurality of chips for actuator unit each including a frame portion which surrounds each of said opening portions and is formed of said sheet main body and at least one said movable unit protruded from said frame portion are formed in a predetermined arrangement and an integrated manner.

10. The actuator array sheet according to claim 9, wherein
a plurality of chips for actuator unit are formed by cutting said sheet main body on a chip-by-chip basis.
